# EUROPEAN PATENT APPLICATION

(11) **EP 4 620 779 A1**
(43) Date of publication of application: **24.09.2025**
(21) Application number: 23891524.3
(22) Date of filing: 13.11.2023
(51) Int. Cl.: B62D 6/00, B62D 5/04, H02P 27/08, B62D 119/00

(54) **MOTOR CONTROL DEVICE**

(30) Priority: 14.11.2022 JP 2022181888
(71) Applicant: JTEKT Corporation, Kariya-shi, Aichi 448-8652 (JP)
(72) Inventor: EDAMOTO, Syouma, Kariya-shi, Aichi 448-8652 (JP); TAMURA, Tsutomu, Kariya-shi, Aichi 448-8652 (JP); FUCHS, Robert, Kariya-shi, Aichi 448-8652 (JP)
(74) Representative: Winter, Brandl - Partnerschaft mbB
(86) International application number: PCT/JP2023/040764
(87) International publication number: WO 2024/106377

(57) **Abstract**

A motor control device includes: a manual steering command value generation unit that generates a manual steering command value using an equation of motion of a reference model of a steering device; an integrated angle command value calculation unit that calculates an integrated angle command value by adding the manual steering command value to an automatic steering command value provided in a driving assist mode; a control unit that performs angle control on an electric motor for steering angle control based on the integrated angle command value; and a motion equation setting unit that changes the equation of motion based on a time differential value of an angle deviation between the automatic steering command value and an actual steering angle.

## Description

### TECHNICAL FIELD

The present invention relates to a motor control device that controls drive of an electric motor for steering angle control.

### BACKGROUND ART

Patent Document 1 discloses that a control gain (controlled variable) is changed based on a lateral displacement of a host vehicle from the center of a traveling lane, a yaw angle of the host vehicle with respect to the traveling lane, etc. Specifically, the control gain is increased when the yaw angle is an angle at which the vehicle is heading toward a departure side, and the control gain is reduced when the yaw angle is an angle at which the vehicle is heading toward a departure avoidance side.

### Related Art Documents

### Patent Documents

Patent Document 1: Japanese Unexamined Patent Application Publication No. 2009-208602 (JP 2009-208602 A)
Patent Document 2: WO 2023/286169

### SUMMARY OF THE INVENTION

### Problem to be Solved by the Invention

An object of an embodiment of the present invention is to provide a motor control device that can apply a steering reaction force to a driver by a novel method in a driving assist mode.

### Means for Solving the Problem

One embodiment of the present invention provides a motor control device that controls drive of an electric motor of a steering device. The motor control device includes: a manual steering command value generation unit that generates a manual steering command value using an equation of motion of a reference model of the steering device; an integrated angle command value calculation unit that calculates an integrated angle command value by adding the manual steering command value to an automatic steering command value provided in a driving assist mode; a control unit that performs angle control on the electric motor for steering angle control based on the integrated angle command value; and a motion equation setting unit that changes the equation of motion based on a time differential value of an angle deviation between the automatic steering command value and an actual steering angle.

With this configuration, it is possible to apply the steering reaction force to the driver by the novel method in the driving assist mode.

The above and other objects, features, and effects of the present invention will become apparent from the following description of an embodiment that will be given with reference to the accompanying drawings.

### BRIEF DESCRIPTION OF THE DRAWINGS

[FIG. 1] FIG. 1 is a schematic diagram showing a schematic configuration of an electric power steering system to which a motor control device according to a first embodiment of the present invention is applied.
[FIG. 2] FIG. 2 is a block diagram showing an electrical configuration of a motor control ECU.
[FIG. 3] FIG. 3 is a graph showing an example of setting an assist torque command value Tₐₛₛₜ with respect to torsion bar torque T_{tb}.
[FIG. 4] FIG. 4 is a schematic diagram showing an example of a reference EPS model that is used in a manual steering command value generation unit.
[FIG. 5] FIG. 5 is a block diagram showing the configuration of an angle control unit.
[FIG. 6] FIG. 6 is a schematic diagram showing an example of the configuration of a physical model of the electric power steering system.
[FIG. 7] FIG. 7 is a block diagram showing the configuration of a disturbance torque estimation unit.
[FIG. 8] FIG. 8 is a schematic diagram showing the configuration of a torque control unit.
[FIG. 9] FIG. 9 is a flowchart showing the procedure of a weight setting process performed by a weight setting unit in a driving assist mode.
[FIG. 10] FIG. 10 is a graph showing an example of setting a first virtual load spring stiffness coefficient kr(e_{L}) and a second virtual load spring stiffness coefficient kg with respect to a lateral deviation e_{L}.
[FIG. 11] FIG. 11 is a graph showing an example of setting a virtual load viscous damping coefficient c(e_{L}) with respect to the lateral deviation e_{L}.

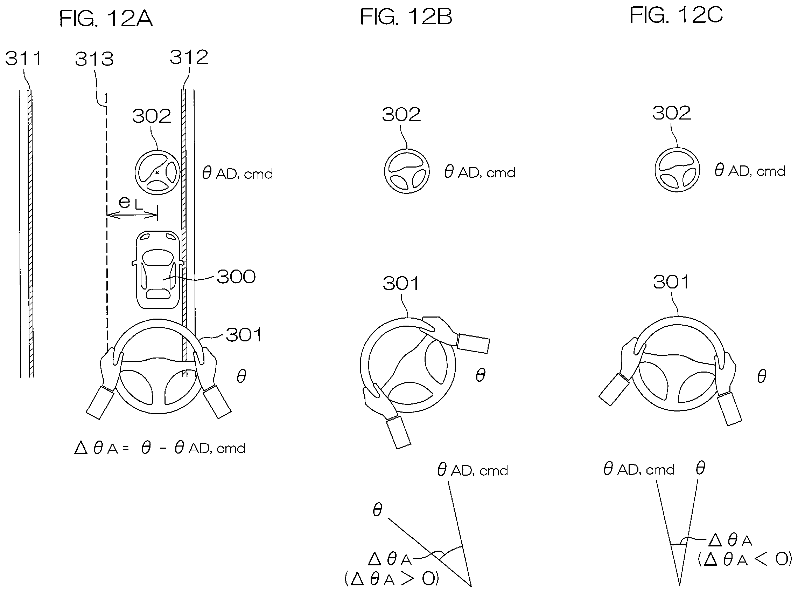

[FIGS. 12] FIG. 12A is a schematic diagram showing an example of a vehicle position when a reference vehicle position is rightward of a lane center, FIG. 12B is a schematic diagram showing an example of an angle deviation Δθ when both an actual steering angle θ and an automatic steering command value θ_{AD,cmd} have positive signs and the actual steering angle θ is larger than the automatic steering command value θ_{AD,cmd}, and FIG. 12C is a schematic diagram showing an example of an angle deviation Δθ_{A-} when the actual steering angle θ has a negative sign and the automatic steering command value θ_{AD,cmd} has a positive sign.
[FIG. 13] FIG. 13 is a flowchart showing the procedure of a spring stiffness coefficient setting process performed by a road reaction force characteristic setting unit in the driving assist mode.
[FIG. 14] FIG. 14 is a graph showing an example of setting a first virtual load viscous damping coefficient cr(e_{L}) and a second virtual load viscous damping coefficient cg with respect to the lateral deviation e_{L}.
[FIG. 15] FIG. 15 is a flowchart showing the procedure of a road reaction force characteristic setting process performed by the road reaction force characteristic setting unit according to a first modification in the driving assist mode.
[FIG. 16] FIG. 16 is a flowchart showing the procedure of a viscous damping coefficient setting process performed by the road reaction force characteristic setting unit according to a second modification in the driving assist mode.
[FIG. 17] FIG. 17 is a flowchart showing the procedure of a road reaction force characteristic setting process performed by the road reaction force characteristic setting unit in the driving assist mode according to a third embodiment.
[FIG. 18] FIG. 18 is a flowchart showing the procedure of a road reaction force characteristic setting process performed by the road reaction force characteristic setting unit in the driving assist mode according to a fourth embodiment.
[FIG. 19] FIG. 19 is a block diagram showing a first modification of the motor control ECU.
[FIG. 20] FIG. 20 is a graph showing an example of setting a target virtual spring reaction force T_{tb,d}(e_{L}) with respect to the lateral deviation e_{L}.
[FIG. 21] FIG. 21 is a graph showing an example of setting the first virtual load spring stiffness coefficient kr and the second virtual load spring stiffness coefficient kg with respect to the lateral deviation e_{L}.
[FIG. 22] FIG. 22 is a graph showing an example of setting the first virtual load viscous damping coefficient cr(e_{L}) and the second virtual load viscous damping coefficient cg with respect to the lateral deviation e_{L}.
[FIG. 23] FIG. 23 is a schematic diagram showing an example of a reference EPS model that is used in a manual steering command value generation unit described in WO 2023/286169.
[FIG. 24] FIG. 24 is a block diagram showing the configuration of a manual steering command value generation unit in the first modification of the motor control ECU.
[FIG. 25A] FIG. 25A is a flowchart showing part of the procedure of a coefficient/weight setting process performed by a motion equation setting unit in the driving assist mode.
[FIG. 25B] FIG. 25B is a flowchart showing part of the procedure of the coefficient/weight setting process performed by the motion equation setting unit in the driving assist mode.
[FIG. 26] FIG. 26 is a block diagram showing the configuration of a manual steering command value generation unit in a second modification of the motor control ECU.

### MODES FOR CARRYING OUT THE INVENTION

### [Description of Embodiment of Invention]

One embodiment of the present invention provides a motor control device that controls drive of an electric motor of a steering device. The motor control device includes: a manual steering command value generation unit that generates a manual steering command value using an equation of motion of a reference model of the steering device; an integrated angle command value calculation unit that calculates an integrated angle command value by adding the manual steering command value to an automatic steering command value provided in a driving assist mode; a control unit that performs angle control on the electric motor for steering angle control based on the integrated angle command value; and a motion equation setting unit that changes the equation of motion based on a time differential value of an angle deviation between the automatic steering command value and an actual steering angle.

With this configuration, it is possible to apply a steering reaction force to a driver by a novel method in the driving assist mode.

In one embodiment of the present invention, the equation of motion includes road reaction force characteristic coefficients, and the motion equation setting unit changes the equation of motion by changing a value of at least one road reaction force characteristic coefficient out of the road reaction force characteristic coefficients included in the equation of motion.

In one embodiment of the present invention, the motion equation setting unit is configured to change the equation of motion by switching a first equation of motion and a second equation of motion, in the first equation of motion, a target virtual spring reaction force corresponding to a lateral position for a reference position of a vehicle relative to a traveling lane is used as a virtual spring reaction force, and in the second equation of motion, a virtual spring reaction force set using a virtual load spring stiffness coefficient that is a constant value regardless of the lateral position is used as the virtual spring reaction force.

In one embodiment of the present invention, the motion equation setting unit is configured to, based on either a lateral position for a reference position of a vehicle relative to a traveling lane or the angle deviation and based on the time differential value, make determination as to whether the vehicle is heading toward a departure side or a departure avoidance side, and change the equation of motion based on a result of the determination.

In one embodiment of the present invention, the motion equation setting unit makes, based on either a lateral position for a reference position of a vehicle relative to a traveling lane or the angle deviation and based on the time differential value, determination as to whether the vehicle is heading toward a departure side or a departure avoidance side, and when the vehicle is heading toward the departure avoidance side, sets the value of the at least one road reaction force characteristic coefficient out of the road reaction force characteristic coefficients included in the equation of motion to be smaller than when the vehicle is heading toward the departure side.

In one embodiment of the present invention, the motion equation setting unit makes, based on either a lateral position for a reference position of a vehicle relative to a traveling lane or the angle deviation and based on the time differential value, determination as to whether the vehicle is heading toward a departure side or a departure avoidance side, and when the vehicle is heading toward the departure side, changes the at least one road reaction force characteristic coefficient out of the road reaction force characteristic coefficients included in the equation of motion based on the lateral position.

In one embodiment of the present invention, the motion equation setting unit makes, using the time differential value, determination as to whether the vehicle is heading toward a departure side or a departure avoidance side, sets the first equation of motion as the equation of motion when the vehicle is heading toward the departure side, and sets the second equation of motion as the equation of motion when the vehicle is heading toward the departure avoidance side.

### [Detailed Description of Embodiments of Invention]

Embodiments of the present invention will be described in detail below with reference to the accompanying drawings.

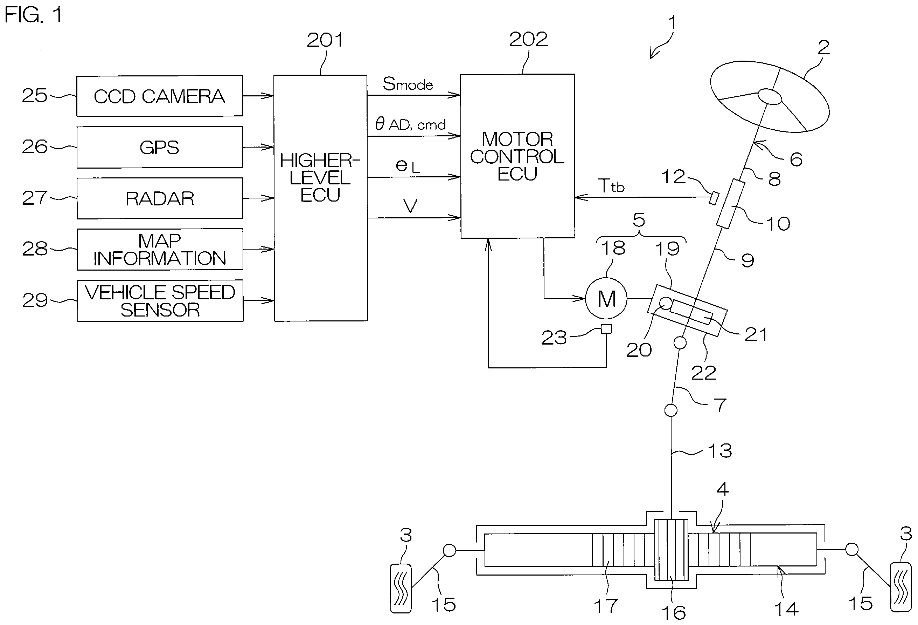

FIG. 1 is a schematic diagram showing a schematic configuration of an electric power steering system to which a steering device according to a first embodiment of the present invention is applied.

An electric power steering system 1 includes: a steering wheel 2 that is a steering member for steering a vehicle; a steering operation mechanism 4 that steers steered wheels 3 in conjunction with rotation of the steering wheel 2; and a steering assist mechanism 5 that assists a driver in steering. The steering wheel 2 and the steering operation mechanism 4 are mechanically connected via a steering shaft 6 and an intermediate shaft 7.

The steering shaft 6 includes an input shaft 8 connected to the steering wheel 2 and an output shaft 9 connected to the intermediate shaft 7. The input shaft 8 and the output shaft 9 are connected via a torsion bar 10 so as to be rotatable relative to each other.

A torque sensor 12 is disposed near the torsion bar 10. The torque sensor 12 detects torsion bar torque T_{tb} applied to the steering wheel 2 based on the amount of relative rotational displacement between the input shaft 8 and the output shaft 9. In the present embodiment, the torsion bar torque T_{tb} is detected by the torque sensor 12 such that, for example, the torque for steering to the left is detected as a positive value and the torque for steering to the right is detected as a negative value. It is herein assumed that the magnitude of the torsion bar torque T_{tb} increases as its absolute value increases. The torsion bar torque T_{tb} is an example of "steering torque" according to the present invention.

The steering operation mechanism 4 is a rack and pinion mechanism including a pinion shaft 13 and a rack shaft 14 that is a steered shaft. The steered wheels 3 are connected to the ends of the rack shaft 14 via tie rods 15 and knuckle arms (not shown). The pinion shaft 13 is connected to the intermediate shaft 7. The pinion shaft 13 is configured to rotate in conjunction with steering of the steering wheel 2. A pinion 16 is connected to a distal end of the pinion shaft 13.

The rack shaft 14 extends linearly along a right-left direction of the vehicle. A rack 17 that meshes with the pinion 16 is formed on an intermediate portion of the rack shaft 14 in an axial direction. The pinion 16 and the rack 17 convert rotation of the pinion shaft 13 into axial movement of the rack shaft 14. The steered wheels 3 can be steered by moving the rack shaft 14 in the axial direction.

When the steering wheel 2 is steered (rotated), this rotation is transmitted to the pinion shaft 13 via the steering shaft 6 and the intermediate shaft 7. The pinion 16 and the rack 17 then convert rotation of the pinion shaft 13 into axial movement of the rack shaft 14. The steered wheels 3 are thus steered.

The steering assist mechanism 5 includes an electric motor 18 that generates a steering assist force (assist torque), and a speed reducer 19 that amplifies output torque of the electric motor 18 and transmits the amplified torque to the steering operation mechanism 4. The speed reducer 19 is a worm gear mechanism including a worm gear 20 and a worm wheel 21 that meshes with the worm gear 20. The speed reducer 19 is housed in a gear housing 22 serving as a transmission mechanism housing.

Hereinafter, the reduction ratio (gear ratio) of the speed reducer 19 is sometimes represented by N. The reduction ratio N is defined as a ratio (θ_{wg}/θ_{ww}) of a worm gear angle θ_{wg} that is the rotational angle of the worm gear 20 to a worm wheel angle θ_{ww} that is the rotational angle of the worm wheel 21.

The worm gear 20 is rotationally driven by the electric motor 18. The worm wheel 21 is connected to the output shaft 9 so as to be rotatable therewith.

When the worm gear 20 is rotationally driven by the electric motor 18, the worm wheel 21 is rotationally driven so that motor torque is applied to the steering shaft 6 and the steering shaft 6 (output shaft 9) is rotated. The rotation of the steering shaft 6 is then transmitted to the pinion shaft 13 via the intermediate shaft 7. Rotation of the pinion shaft 13 is converted into axial movement of the rack shaft 14. The steered wheels 3 are thus steered. That is, rotationally driving the worm gear 20 using the electric motor 18 enables steering assist by the electric motor 18 and steering of the steered wheels 3. The electric motor 18 is provided with a rotational angle sensor 23 for detecting the rotational angle of a rotor of the electric motor 18.

The torque that is applied to the output shaft 9 (example of an object to be driven by the electric motor 18) includes motor torque from the electric motor 18 and disturbance torque T_{lc} other than the motor torque. The disturbance torque T_{lc} other than the motor torque includes the torsion bar torque T_{tb}, road load torque (road reaction torque) Tᵣₗ, and friction torque T_{f}.

The torsion bar torque T_{tb} is torque that is applied from the steering wheel 2 side to the output shaft 9 due to a force that is applied to the steering wheel 2 by the driver, a force that is generated by steering inertia, etc.

The road load torque Tᵣₗ is torque that is applied from the steered wheel 3 side to the output shaft 9 via the rack shaft 14 due to self-aligning torque that is generated by a tire, a force that is generated by a suspension and tire wheel alignment, a friction force of the rack and pinion mechanism, etc.

The vehicle is equipped with a CCD (Charge Coupled Device) camera 25 that captures an image of the road ahead of the vehicle in the advancing direction, a GPS (Global Positioning System) 26 that detects the position of the vehicle, a radar 27 that detects a road shape and obstacles, a map information memory 28 that stores map information, and a vehicle speed sensor 29.

The CCD camera 25, the GPS 26, the radar 27, the map information memory 28, and the vehicle speed sensor 29 are connected to a higher-level ECU (ECU: Electronic Control Unit) 201 that performs driving assist control. The higher-level ECU 201 performs surrounding environment recognition, vehicle position estimation, route planning, etc. based on information obtained by the CCD camera 25, the GPS 26, the radar 27, and the vehicle speed sensor 29 and the map information, and determines control target values for steering and drive actuators.

In the present embodiment, the driving mode includes a normal mode and a driving assist mode. The higher-level ECU 201 sets an automatic steering command value θ_{AD,cmd} for driving assist in the driving assist mode. The automatic steering command value θ_{AD,cmd} is a target value of the steering angle for causing the vehicle to travel along a target travel line.

In the present embodiment, the driving assist is lane keeping assist (LKA) for the vehicle to avoid departing from its lane. The driving assist may be lane centering assist (LCA) that assists in steering the vehicle so that it travels at the center of the traveling lane. The driving assist may include the lane keeping assist (LKA) and the lane centering assist (LCA) as in a modification of a motor control ECU described later.

In the present embodiment, the automatic steering command value θ_{AD,cmd} is expressed as a rotational amount (rotational angle) from a neutral position of the output shaft 9. The rotational amount in a leftward steering direction from the neutral position is expressed as a positive value, and the rotational amount in a rightward steering direction from the neutral position is expressed as a negative value. The automatic steering command value θ_{AD,cmd} is set based on, for example, the vehicle speed, the lateral deviation from the target travel line (lane center line), and the yaw deviation of the vehicle from the target travel line. A process of setting such an automatic steering command value θ_{AD,cmd} is well known, and therefore will not be described in detail herein.

The higher-level ECU 201 outputs a mode signal S_{mode} indicating whether the driving mode is the normal mode or the driving assist mode, and a lateral deviation e_{L} from the target travel line. In the present embodiment, the lateral deviation e_{L} is a distance from the target travel line to a reference position of the vehicle (hereinafter referred to as "reference vehicle position"). The reference vehicle position is set as a predetermined position at the width center of the vehicle.

In the present embodiment, the lateral deviation e_{L} is 0 (e_{L} = 0) when the reference vehicle position is on the target travel line, a positive value (e_{L} > 0) when the reference vehicle position is leftward of the target travel line in the advancing direction, and a negative value (e_{L} < 0) when the reference vehicle position is rightward of the target travel line in the advancing direction. The lateral deviation e_{L} is an example of "lateral position for reference vehicle position with respect to traveling lane" according to the present invention.

The mode signal S_{mode}, the automatic steering command value θ_{AD,cmd}, the lateral deviation e_{L}, and a vehicle speed V are provided to a motor control ECU 202 via an in-vehicle network. The torsion bar torque T_{tb} detected by the torque sensor 12 and an output signal from the rotational angle sensor 23 are input to the motor control ECU 202. The motor control ECU 202 controls the electric motor 18 based on these input signals and information provided from the higher-level ECU 201.

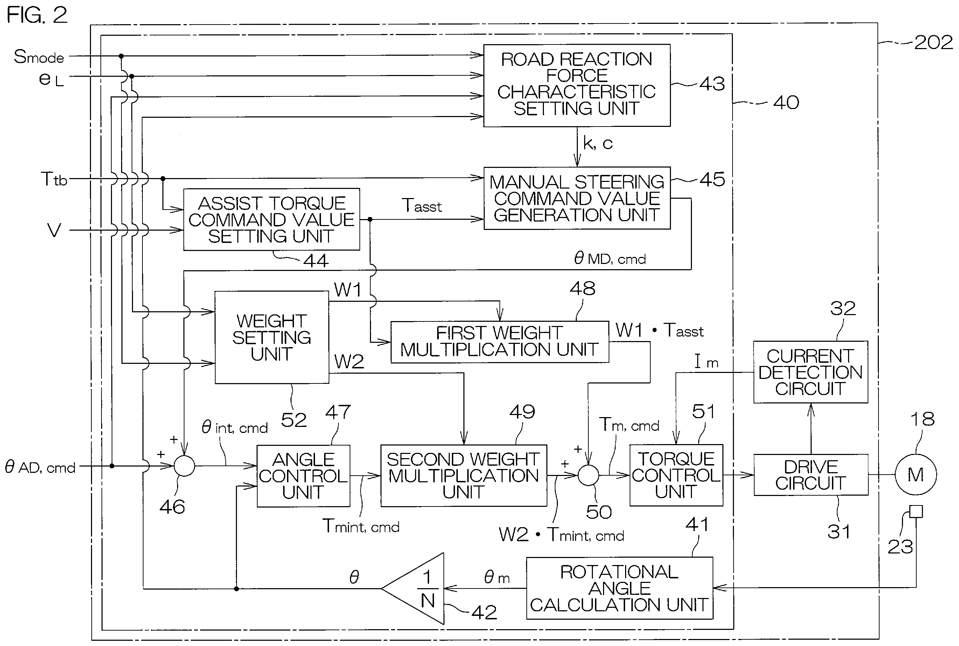

FIG. 2 is a block diagram showing an electrical configuration of the motor control ECU 202.

Operation for a case where the driving mode is the driving assist mode will be mainly described below.

The motor control ECU 202 includes a microcomputer 40, a drive circuit (inverter circuit) 31 that is controlled by the microcomputer 40 and supplies electric power to the electric motor 18, and a current detection circuit 32 that detects a current (hereinafter referred to as "motor current Iₘ") that flows through the electric motor 18.

The microcomputer 40 includes a CPU and a memory (such as a ROM, a RAM, and a non-volatile memory), and functions as a plurality of functional processing units by executing a predetermined program. The plurality of functional processing units includes a rotational angle calculation unit 41, a reduction ratio division unit 42, a road reaction force characteristic setting unit 43, an assist torque command value setting unit 44, a manual steering command value generation unit 45, an integrated angle command value calculation unit 46, an angle control unit 47, a first weight multiplication unit 48, a second weight multiplication unit 49, an addition unit 50, a torque control unit (current control unit) 51, and a weight setting unit 52.

The rotational angle calculation unit 41 calculates a rotor rotational angle θₘ of the electric motor 18 based on an output signal from the rotational angle sensor 23. The reduction ratio division unit 42 converts the rotor rotational angle θₘ into a rotational angle (actual steering angle) θ of the output shaft 9 by dividing the rotor rotational angle θₘ by the reduction ratio N. In the present embodiment, the actual steering angle θ is expressed as a rotational amount (rotational angle) from the neutral position of the output shaft 9. The rotational amount in the leftward steering direction from the neutral position is expressed as a positive value, and the rotational amount in the rightward steering direction from the neutral position is expressed as a negative value.

The road reaction force characteristic setting unit 43 sets a virtual load spring stiffness coefficient k and a virtual load viscous coefficient c to be used by the manual steering command value generation unit 45. The road reaction force characteristic setting unit 43 is an example of "motion equation setting unit" according to the present invention. The operation of the road reaction force characteristic setting unit 43 will be described in detail later.

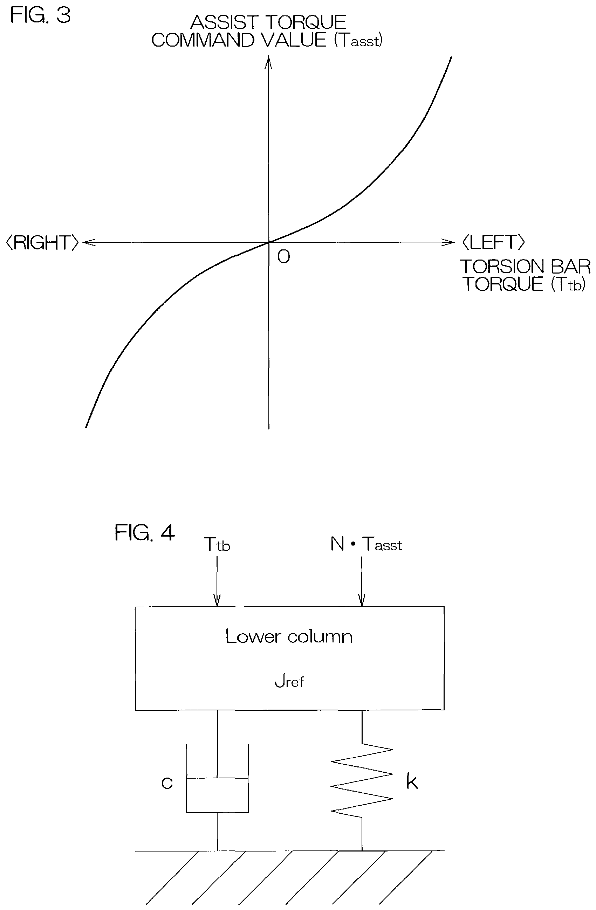

The assist torque command value setting unit 44 sets an assist torque command value Tₐₛₛₜ that is a target value of the assist torque necessary for a manual operation. The assist torque command value setting unit 44 sets the assist torque command value Tₐₛₛₜ based on the vehicle speed V provided from the higher-level ECU 201 and the torsion bar torque T_{tb} detected by the torque sensor 12. An example of setting the assist torque command value Tₐₛₛₜ with respect to the torsion bar torque T_{tb} is shown in FIG. 3.

The assist torque command value Tₐₛₛₜ is set to a positive value when the electric motor 18 should generate a steering assist force for steering to the left, and is set to a negative value when the electric motor 18 should generate a steering assist force for steering to the right. The assist torque command value Tₐₛₛₜ is positive for a positive value of the torsion bar torque T_{tb}, and is negative for a negative value of the torsion bar torque T_{tb}.

The assist torque command value Tₐₛₛₜ is set so that its absolute value increases as the absolute value of the torsion bar torque T_{tb} increases and its absolute value decreases as the vehicle speed V increases.

The assist torque command value setting unit 44 may calculate the assist torque command value Tₐₛₛₜ by multiplying the torsion bar torque T_{tb} by a preset constant.

The manual steering command value generation unit 45 is provided to, when the driver operates the steering wheel 2, set the steering angle (more exactly, the rotational angle θ of the output shaft 9) that matches the steering wheel operation as a manual steering command value θ_{MD,cmd}. The manual steering command value generation unit 45 generates the manual steering command value θ_{MD,cmd} using the torsion bar torque T_{tb} detected by the torque sensor 12, the assist torque command value Tₐₛₛₜ set by the assist torque command value setting unit 44, and the virtual load spring stiffness coefficient k and the virtual load viscous damping coefficient c set by the road reaction force characteristic setting unit 43. The manual steering command value generation unit 45 will be described in detail later.

The integrated angle command value calculation unit 46 calculates an integrated angle command value θ_{int,cmd} by adding the manual steering command value θ_{MD,cmd} to the automatic steering command value θ_{AD,cmd} set by the higher-level ECU 201.

The angle control unit 47 calculates an integrated motor torque command value T_{mint,cmd} that matches the integrated angle command value θ_{int,cmd} based on the integrated angle command value θ_{int,cmd}. The angle control unit 47 will be described in detail later.

The first weight multiplication unit 48 multiplies the assist torque command value Tₐₛₛₜ set by the assist torque command value setting unit 44 by a first weight W1. The second weight multiplication unit 49 multiplies the integrated motor torque command value T_{mint,cmd} by a second weight W2. The first weight W1 and the second weight W2 are set by the weight setting unit 52. The weight setting unit 52 will be described in detail later.

The addition unit 50 calculates a motor torque command value T_{m,cmd} for the electric motor 18 by adding an assist torque command value W1·Tₐₛₛₜ after first weight multiplication (after a first weighting process) and an integrated motor torque command value W2·T_{mint,cmd} after second weight multiplication (after a second weighting process).

The torque control unit 51 drives the drive circuit 31 so that the motor torque of the electric motor 18 is brought closer to the motor torque command value T_{m,cmd}.

In the present embodiment, the manual steering command value generation unit 45 uses a reference EPS model to set the manual steering command value θ_{MD,cmd}.

FIG. 4 is a schematic diagram showing an example of the reference EPS model that is used in the manual steering command value generation unit 45.

The reference EPS model in FIG. 4 is an example of "reference model of steering device" according to the present disclosure. The reference EPS model is a single inertia model including a lower column. The lower column corresponds to the output shaft 9 and the worm wheel 21. In FIG. 4, J_{ref} is the inertia of the lower column, and T_{tb} is the torsion bar torque. The torsion bar torque T_{tb}, assist torque N·Tₐₛₛₜ acting on the output shaft 9 from the electric motor 18, and the road load torque Tᵣₗ are applied to the lower column. When the rotational angle of the lower column is the manual steering command value θ_{MD,cmd}, the virtual road load torque (virtual road reaction force) Tᵣₗ is given by expression (1) below using the virtual load spring stiffness coefficient k, the virtual load viscous damping coefficient c, and the manual steering command value θ_{MD,cmd}.${T}_{rl} = - k ⋅ {θ}_{MD , cmd} - c \left({dθ}_{MD , cmd}/dt\right)$ An equation of motion of the reference EPS model is given by expression (2) below.${J}_{ref} ⋅ {d}^{2} {{θ}_{MD}}_{, cmd} / {dt}^{2} = {T}_{tb} + N ⋅ {T}_{asst} - k ⋅ {θ}_{MD , cmd} - c \left(d{θ}_{MD , cmd}/dt\right)$ (2) The values of the virtual load spring stiffness coefficient k and the virtual load viscous damping coefficient c are set by the road reaction force characteristic setting unit 43. The virtual load spring stiffness coefficient k and the virtual load viscous damping coefficient c that are the coefficients of the equation of motion given by expression (2) are examples of "road reaction force characteristic coefficient" according to the present invention.

The manual steering command value generation unit 45 calculates the manual steering command value θ_{MD,cmd} by solving the differential equation given by expression (2) by substituting the torsion bar torque T_{tb} detected by the torque sensor 12 into T_{tb} and substituting the assist torque command value Tₐₛₛₜ set by the assist torque command value setting unit 44 into Tₐₛₛₜ.

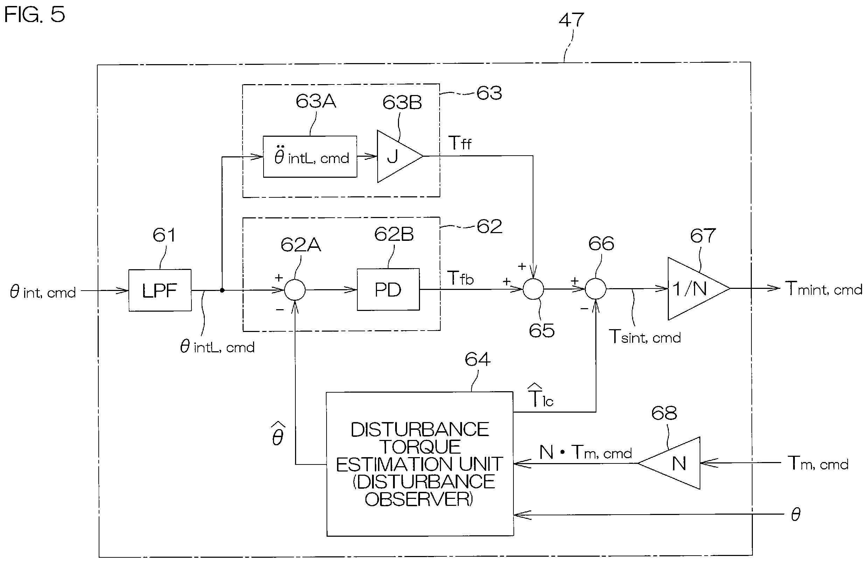

FIG. 5 is a block diagram showing the configuration of the angle control unit 47.

The angle control unit 47 calculates the integrated motor torque command value T_{mint,cmd} based on the integrated angle command value θ_{int,cmd}. The angle control unit 47 includes a low-pass filter (LPF) 61, a feedback control unit 62, a feedforward control unit 63, a disturbance torque estimation unit 64, a torque addition unit 65, a disturbance torque compensation unit 66, a reduction ratio division unit 67, and a reduction ratio multiplication unit 68.

The reduction ratio multiplication unit 68 converts the motor torque command value T_{m,cmd} calculated by the addition unit 50 (see FIG. 2) into an output shaft torque command value N·T_{m,cmd} that acts on the output shaft 9 (worm wheel 21) by multiplying the motor torque command value T_{m,cmd} by the reduction ratio N of the speed reducer 19.

The low-pass filter 61 performs a low-pass filtering process on the integrated angle command value θ_{int,cmd}. An integrated angle command value θ_{intL,cmd} after the low-pass filtering process is provided to the feedback control unit 62 and the feedforward control unit 63.

The feedback control unit 62 is provided to bring an estimated steering angle value ^θ calculated by the disturbance torque estimation unit 64 closer to the integrated angle command value θ_{intL,cmd} after the low-pass filtering process. The feedback control unit 62 includes an angle deviation calculation unit 62A and a PD control unit 62B. The angle deviation calculation unit 62A calculates a deviation Δθ (= θ_{intL,cmd} - ^θ) between the integrated angle command value θ_{intL,cmd} and the estimated steering angle value ^θ. The angle deviation calculation unit 62A may calculate, as the angle deviation Δθ, a deviation (θ_{intL,cmd} - θ) between the integrated angle command value θ_{intL,cmd} and the actual steering angle θ calculated by the reduction ratio division unit 42 (see FIG. 2).

The PD control unit 62B calculates feedback control torque T_{fb} by performing PD calculation (proportional-derivative calculation) for the angle deviation Δθ calculated by the angle deviation calculation unit 62A. The feedback control torque T_{fb} is provided to the torque addition unit 65.

The feedforward control unit 63 is provided to improve control response by compensating for a delay in response due to the inertia of the electric power steering system 1. The feedforward control unit 63 includes an angular acceleration calculation unit 63A and an inertia multiplication unit 63B. The angular acceleration calculation unit 63A calculates a target angular acceleration d²θ_{intL,cmd}/dt² by obtaining the second derivative of the integrated angle command value θ_{intL,cmd}.

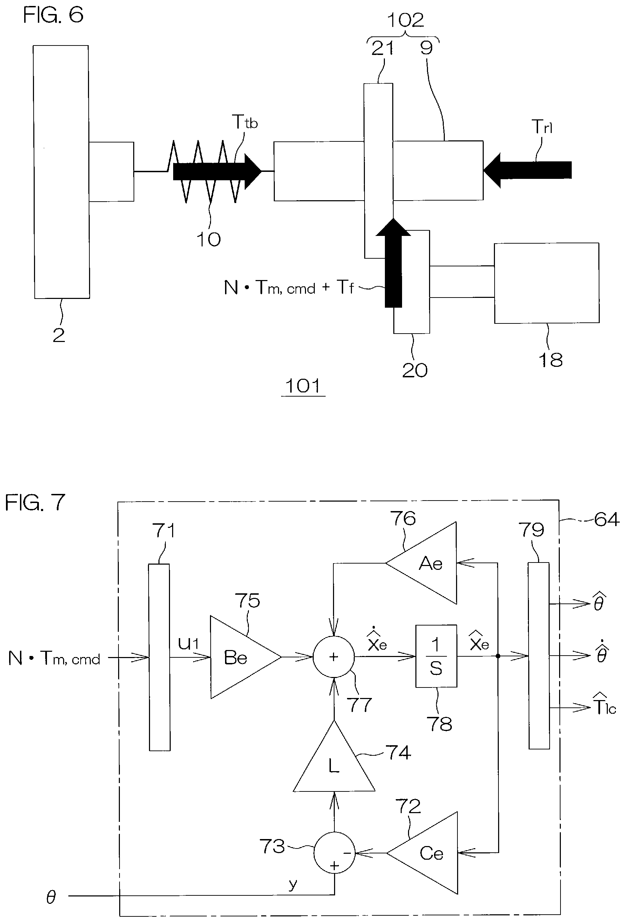

The inertia multiplication unit 63B calculates feedforward control torque T_{ff} (= J·d²θ_{intL,cmd}/dt²) by multiplying the target angular acceleration d²θ_{intL,cmd}/dt² calculated by the angular acceleration calculation unit 63A by inertia J of the electric power steering system 1. The inertia J is obtained from, for example, a physical model of the electric power steering system 1 (see FIG. 6) described later. The feedforward control torque T_{ff} is provided to the torque addition unit 65 as an inertia compensation value.

The torque addition unit 65 calculates a basic torque command value (T_{fb} + T_{ff}) by adding the feedforward control torque T_{ff} to the feedback control torque T_{fb}.

The disturbance torque estimation unit 64 is provided to estimate non-linear torque (disturbance torque: torque other than the motor torque) that is generated as disturbance in a plant (object to be controlled by the electric motor 18). The disturbance torque estimation unit 64 estimates the disturbance torque (disturbance load) T_{lc}, the steering angle θ, and a steering angle differential value (angular velocity) dθ/dt based on the output shaft torque command value N·T_{m,cmd} and the actual steering angle θ. The estimated values of the disturbance torque T_{lc}, the steering angle θ, and the steering angle differential value (angular velocity) dθ/dt are represented by ^T_{lc}, ^θ, and d^θ/dt, respectively. The disturbance torque estimation unit 64 will be described in detail later.

The estimated disturbance torque value ^T_{lc} calculated by the disturbance torque estimation unit 64 is provided to the disturbance torque compensation unit 66 as a disturbance torque compensation value. The estimated steering angle value ^θ calculated by the disturbance torque estimation unit 64 is provided to the angle deviation calculation unit 62A.

The disturbance torque compensation unit 66 calculates an integrated steering torque command value T_{sint,cmd} (= T_{fb} + T_{ff} - ^T_{lc}) by subtracting the estimated disturbance torque value ^T_{lc} from the basic torque command value (T_{fb} + T_{ff}). The integrated steering torque command value T_{sint,cmd} (torque command value for the output shaft 9) with the disturbance torque compensated for is thus obtained.

The integrated steering torque command value T_{sint,cmd} is provided to the reduction ratio division unit 67. The reduction ratio division unit 67 calculates the integrated motor torque command value T_{mint,cmd} by dividing the integrated steering torque command value T_{sint,cmd} by the reduction ratio N. The integrated motor torque command value T_{mint,cmd} is provided to the second weight multiplication unit 49 (see FIG. 2).

The disturbance torque estimation unit 64 will be described in detail. The disturbance torque estimation unit 64 is a disturbance observer that estimates the disturbance torque T_{lc}, the steering angle θ, and the angular velocity dθ/dt using, for example, a physical model 101 of the electric power steering system 1 shown in FIG. 6.

The physical model 101 includes a plant (example of an object to be driven by the motor) 102 that includes the output shaft 9 and the worm wheel 21 fixed to the output shaft 9. The torsion bar torque T_{tb} is applied from the steering wheel 2 to the plant 102 via the torsion bar 10, and the road load torque Tᵣₗ is applied from the steered wheel 3 side to the plant 102.

Moreover, the output shaft torque command value N·T_{m,cmd} is applied to the plant 102 via the worm gear 20, and the friction torque T_{f} is applied to the plant 102 due to the friction between the worm wheel 21 and the worm gear 20.

An equation of motion for the inertia of the physical model 101 is given by expression (3) below, where J is the inertia of the plant 102.
[Math. 1] $\begin{matrix}J {θ}^{¨} = N ⋅ {T}_{m , cmd} + {T}_{lc} \\ Tlc = {T}_{tb} + {T}_{rl} + {T}_{f}\end{matrix}$

d²θ/dt² is the angular acceleration of the plant 102. N is the reduction ratio of the speed reducer 19. T_{lc} represents the disturbance torque other than the motor torque that is applied to the plant 102. While the disturbance torque T_{lc} is shown as the sum of the torsion bar torque T_{tb}, the road load torque Tᵣₗ, and the friction torque T_{f} in the present embodiment, the disturbance torque T_{lc} actually includes torque other than these.

An equation of state for the physical model 101 in FIG. 6 is given by expression (4) below.
[Math. 2] $\left\{\begin{matrix}\dot{x} = Ax + {B}_{1} {u}_{1} + {B}_{2} {u}_{2} \\ y = Cx + {Du}_{1}\end{matrix}\right.$

In expression (4) above, x is a state variable vector, u₁ is a known input vector, u₂ is an unknown input vector, and y is an output vector (measured value). In expression (4) above, A is a system matrix, B₁ is a first input matrix, B₂ is a second input matrix, C is an output matrix, and D is a direct feedthrough matrix.

The above equation of state is extended to a system including the unknown input vector u₂ as one of the states. An equation of state of the extended system (extended equation of state) is given by expression (5) below.
[Math. 3] $\left\{\begin{matrix}{\dot{X}}_{e} = {A}_{e} {x}_{e} + {B}_{e} {u}_{1} \\ y = {C}_{e} {x}_{e}\end{matrix}\right.$

In expression (5), xₑ is a state variable vector of the extended system, and is given by expression (6) below.
[Math. 4] ${x}_{e} = \left[\begin{matrix}x \\ {u}_{2}\end{matrix}\right]$

In expression (5), Aₑ is a system matrix of the extended system, Bₑ is a known input matrix of the extended system, and Cₑ is an output matrix of the extended system.

A disturbance observer (extended state observer) given by the equation of expression (7) below is constructed from the extended equation of state given by expression (5).
[Math. 5] $\left\{\begin{matrix}{\dot{\hat{x}}}_{e} = {A}_{e} {x}_{e} + {B}_{e} {u}_{1} + L \left(y-\hat{y}\right) \\ \hat{y} = {C}_{e} {\hat{x}}_{e}\end{matrix}\right.$

In expression (7), ^xₑ represents an estimated value of xₑ. L is an observer gain. ^y represents an estimated value of y. ^xₑ is given by expression (8) below.
[Math. 6] ${\hat{x}}_{e} = \left[\begin{matrix}\hat{θ} \\ \dot{\hat{θ}} \\ {\hat{T}}_{lc}\end{matrix}\right]$

In expression (8), ^θ is an estimated value of θ, and ^T_{lc} is an estimated value of T_{lc}.

The disturbance torque estimation unit 64 calculates the state variable vector ^xₑ based on the equation of expression (7).

FIG. 7 is a block diagram showing the configuration of the disturbance torque estimation unit 64.

The disturbance torque estimation unit 64 includes an input vector input unit 71, an output matrix multiplication unit 72, a first addition unit 73, a gain multiplication unit 74, an input matrix multiplication unit 75, a system matrix multiplication unit 76, a second addition unit 77, an integration unit 78, and a state variable vector output unit 79.

The output shaft torque command value N·T_{m,cmd} calculated by the reduction ratio multiplication unit 68 (see FIG. 5) is provided to the input vector input unit 71. The input vector input unit 71 outputs the input vector u₁.

The output of the integration unit 78 is the state variable vector ^xₑ (see expression (8)). At the start of the calculation, an initial value is given as the state variable vector ^xₑ. The initial value of the state variable vector ^xₑ is, for example, 0.

The system matrix multiplication unit 76 multiplies the state variable vector ^xₑ by the system matrix Aₑ. The output matrix multiplication unit 72 multiplies the state variable vector ^xₑ by the output matrix Cₑ.

The first addition unit 73 subtracts the output (Cₑ·^xₑ) of the output matrix multiplication unit 72 from the output vector (measured value) y that is the actual steering angle θ calculated by the reduction ratio division unit 42 (see FIG. 2). That is, the first addition unit 73 calculates the difference (y - ^y) between the output vector y and the estimated output vector value ^y (= Cₑ·^xₑ). The gain multiplication unit 74 multiplies the output (y - ^y) of the first addition unit 73 by the observer gain L (see expression (7)).

The input matrix multiplication unit 75 multiplies the input vector u₁ output from the input vector input unit 71 by the input matrix Bₑ. The second addition unit 77 calculates a differential value d^xₑ/dt of the state variable vector by adding the output (Bₑ·u₁) of the input matrix multiplication unit 75, the output (Aₑ·^xₑ) of the system matrix multiplication unit 76, and the output (L(y - ^y)) of the gain multiplication unit 74. The integration unit 78 calculates the state variable vector ^xₑ by integrating the output (d^xₑ/dt) of the second addition unit 77. The state variable vector output unit 79 calculates the estimated disturbance torque value ^T_{lc}, the estimated steering angle value ^θ, and the estimated angular velocity value d^θ/dt based on the state variable vector ^xₑ.

Unlike the extended state observer described above, a typical disturbance observer is composed of an inverse model of the plant and a low-pass filter. An equation of motion of the plant is given by expression (3) as described above. The inverse model of the plant is therefore given by expression (9) below.
[Math. 7] ${T}_{lc} = J {θ}^{¨} - N ⋅ {T}_{m , cmd}$

The inputs to the typical disturbance observer are J·d²θ/dt² and N·T_{m,cmd}. Since the second derivative of the actual steering angle θ is used, noise of the rotational angle sensor 23 has a great influence. The extended state observer according to the embodiment described above estimates the disturbance torque using an integral type. Therefore, the influence of noise due to differentiation can be reduced.

The typical disturbance observer composed of the inverse model of the plant and the low-pass filter may be used as the disturbance torque estimation unit 64.

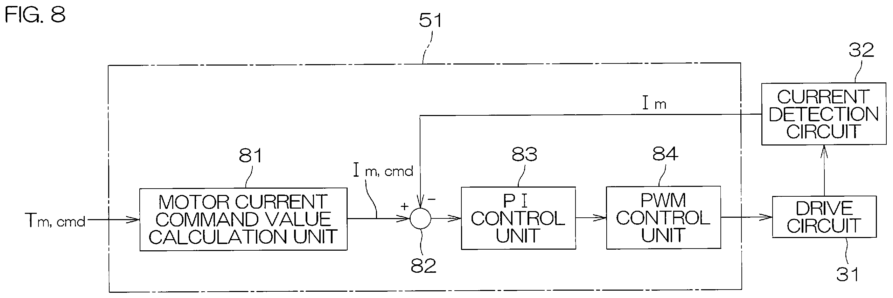

FIG. 8 is a schematic diagram showing the configuration of the torque control unit 51.

The torque control unit 51 (see FIG. 2) includes a motor current command value calculation unit 81, a current deviation calculation unit 82, a PI control unit 83, and a PWM (Pulse Width Modulation) control unit 84.

The motor current command value calculation unit 81 calculates a motor current command value I_{m,cmd} by dividing the motor torque command value T_{m,cmd} calculated by the addition unit 50 (see FIG. 2) by a torque constant Kt of the electric motor 18.

The current deviation calculation unit 82 calculates a deviation ΔI (= I_{m,cmd} - Iₘ) between the motor current command value I_{m,cmd} obtained by the motor current command value calculation unit 81 and the motor current Iₘ detected by the current detection circuit 32.

The PI control unit 83 generates a drive command value for controlling the motor current Iₘ flowing through the electric motor 18 to the motor current command value I_{m,cmd} by performing PI calculation (proportional-integral calculation) for the current deviation ΔI calculated by the current deviation calculation unit 82. The PWM control unit 84 generates a PWM control signal with a duty ratio corresponding to the drive command value, and supplies the PWM control signal to the drive circuit 31. Electric power corresponding to the drive command value is thus supplied to the electric motor 18.

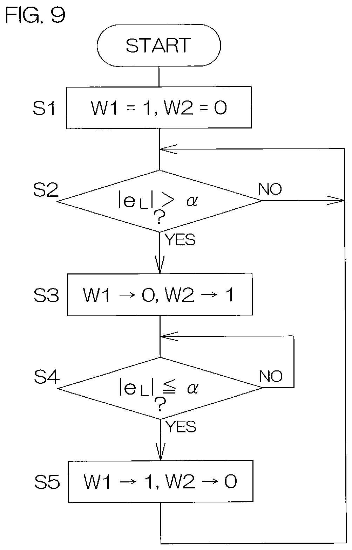

FIG. 9 is a flowchart showing the procedure of a weight setting process performed by the weight setting unit 52 in the driving assist mode.

When the driving mode is the driving assist mode, the weight setting unit 52 sets the first weight W1 to 1, and sets the second weight W2 to 0 (step S1). The control mode of the electric motor 18 thus becomes a first control mode in which the drive of the electric motor 18 is controlled only by the assist torque command value Tₐₛₛₜ.

When the driving mode is the driving assist mode, the automatic steering command value θ_{AD,cmd} is set by the higher-level ECU 201, and the automatic steering command value θ_{AD,cmd}, the mode signal S_{mode}, and the lateral deviation e_{L} are provided to the motor control ECU 202.

Next, the weight setting unit 52 determines whether an absolute value |e_{L}| of the lateral deviation e_{L} is larger than a predetermined value α (step S2). The predetermined value α is a value larger than 0, and is set to a value within a range of, for example, 0.2 m or more and 1.75 m or less.

When the absolute value |e_{L}| of the lateral deviation e_{L} is equal to or smaller than α (step S2: NO), that is, when the distance between the reference vehicle position and the lane center is equal to or smaller than α, the weight setting unit 52 returns to step S2.

When determination is made in step S2 that the absolute value |e_{L}| of the lateral deviation e_{L} is larger than α (step S2: YES), that is, when the distance between the reference vehicle position and the lane center is larger than α, the weight setting unit 52 sets the first weight W1 to 0, and sets the second weight W2 to 1 (step S3). At this time, it is preferable that the weight setting unit 52 gradually reduce the first weight W1 from 1 to 0 and gradually increase the second weight W2 from 0 to 1. The time for gradually reducing the first weight W1 from 1 to 0 (time for gradually increasing the second weight W2 from 0 to 1) may be, for example, about 0.1 seconds.

The control mode of the electric motor 18 thus becomes a second control mode in which the drive of the electric motor 18 is controlled by the integrated motor torque command value T_{mint,cmd}. While the first weight W1 is being gradually reduced (while the second weight W2 is being gradually increased), the electric motor 18 is controlled based on the sum of the assist torque command value W1·Tₐₛₛₜ after the first weight multiplication and the integrated motor torque command value W2·T_{mint,cmd} after the second weight multiplication.

In the second control mode, the electric motor 18 is controlled based on the integrated angle command value θ_{int,cmd} that is the sum of the manual steering command value θ_{MD,cmd} and the automatic steering command value θ_{AD,cmd}. The steering reaction force based on the virtual road load torque Tᵣₗ used to calculate the manual steering command value θ_{MD,cmd} is thus reflected.

Next, the weight setting unit 52 determines whether the absolute value |e_{L}| of the lateral deviation e_{L} is equal to or smaller than α (step S4).

When the absolute value |e_{L}| of the lateral deviation e_{L} is larger than α (step S4: NO), the weight setting unit 52 returns to step S4.

When determination is made in step S4 that the absolute value |e_{L}| of the lateral deviation e_{L} is equal to or smaller than α (step S4: YES), the weight setting unit 52 sets the first weight W1 to 1, and sets the second weight W2 to 0 (step S5). At this time, it is preferable that the weight setting unit 52 gradually increase the first weight W1 from 0 to 1 and gradually reduce the second weight W2 from 1 to 0. The time for gradually increasing the first weight W1 from 0 to 1 (time for gradually reducing the second weight W2 from 1 to 0) may be, for example, about 0.1 seconds.

The control mode of the electric motor 18 thus becomes the first control mode. While the first weight W1 is being gradually increased (while the second weight W2 is being gradually reduced), the electric motor 18 is controlled based on the sum of the assist torque command value W1·Tₐₛₛₜ after the first weight multiplication and the integrated motor torque command value W2·T_{mint,cmd} after the second weight multiplication.

In the first control mode, the steering reaction force based on the virtual road load torque Tᵣₗ used to calculate the manual steering command value θ_{MD,cmd} is not reflected.

After the process of step S5 is performed, the weight setting unit 52 returns to step S2.

When the driving mode is the normal mode, the weight setting unit 52 sets the first weight W1 to 1, and sets the second weight W2 to 0. Thus, in the normal mode, the drive of the electric motor 18 is controlled based only on the assist torque command value Tₐₛₛₜ.

Next, the operation of the road reaction force characteristic setting unit 43 will be described. The road reaction force characteristic setting unit 43 sets the virtual load spring stiffness coefficient k and the virtual load viscous damping coefficient c to be used for calculating the manual steering command value θ_{MD,cmd}. The manual steering command value θ_{MD,cmd} is calculated by the manual steering command value generation unit 45 (see FIG. 2).

First, the operation of the road reaction force characteristic setting unit 43 when the driving mode is the driving assist mode will be described.

In the present embodiment, two types of stiffness coefficient, that is, a first virtual load spring stiffness coefficient kr(e_{L}) and a second virtual load spring stiffness coefficient kg, are prepared as the virtual load spring stiffness coefficient k to be used in the driving assist mode. Only one type of virtual load viscous damping coefficient c(e_{L}) is prepared as the virtual load viscous damping coefficient c to be used in the driving assist mode.

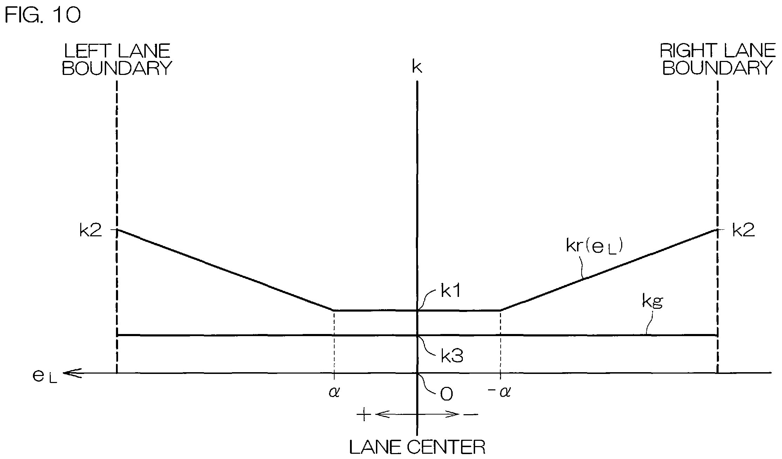

FIG. 10 is a graph showing an example of setting the first virtual load spring stiffness coefficient kr(e_{L}) and the second virtual load spring stiffness coefficient kg with respect to the lateral deviation e_{L}.

The first virtual load spring stiffness coefficient kr(e_{L}) is set to a constant value k1 when the absolute value |e_{L}| of the lateral deviation e_{L} is equal to or smaller than α. k1 is a predetermined value larger than 0. When the absolute value |e_{L}| of the lateral deviation e_{L} is larger than α, the first virtual load spring stiffness coefficient kr(e_{L}) is set according to a characteristic that the first virtual load spring stiffness coefficient kr(e_{L}) increases from k1 to k2 larger than k1 as the absolute value |e_{L}| of the lateral deviation e_{L} increases. In FIG. 10, the first virtual load spring stiffness coefficient kr(e_{L}) changes linearly from k1 to k2, but may change non-linearly.

The second virtual load spring stiffness coefficient kg is set to a constant value k3 regardless of the lateral deviation e_{L}. k3 is set to a value larger than 0 and smaller than k1.

The value of the first virtual load spring stiffness coefficient kr(e_{L}) with respect to the lateral deviation e_{L} shown in FIG. 10 is stored in the memory as a first spring stiffness coefficient map. The value k3 of the second virtual load spring stiffness coefficient kg shown in FIG. 10 is stored in the memory as the second virtual load spring stiffness coefficient kg.

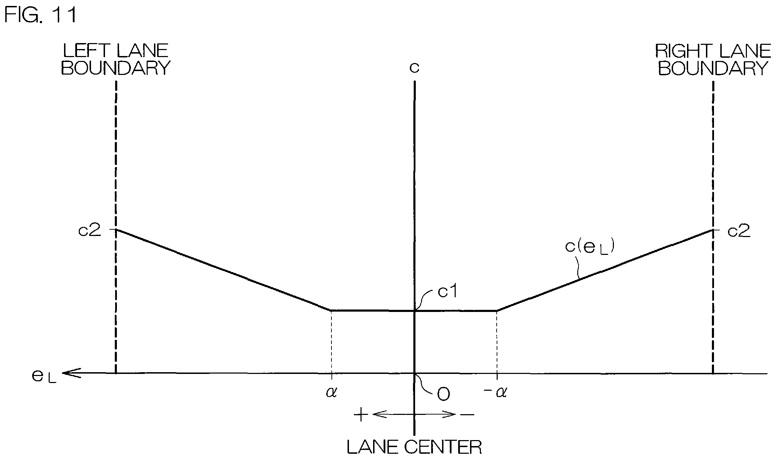

FIG. 11 is a graph showing an example of setting the virtual load viscous damping coefficient c(e_{L}) with respect to the lateral deviation e_{L}.

The virtual load viscous damping coefficient c(e_{L}) is set to a constant value c1 when the absolute value |e_{L}| of the lateral deviation e_{L} is equal to or smaller than α. c1 is a predetermined value larger than 0. When the absolute value |e_{L}| of the lateral deviation e_{L} is larger than α, the virtual load viscous damping coefficient c(e_{L}) is set according to a characteristic that the virtual load viscous damping coefficient c(e_{L}) increases from c1 to c2 larger than c1 as the absolute value |e_{L}| of the lateral deviation e_{L} increases. In FIG. 11, the virtual load viscous damping coefficient c(e_{L}) changes linearly from c1 to c2, but may change non-linearly.

The value of the virtual load viscous damping coefficient c(e_{L}) with respect to the lateral deviation e_{L} shown in FIG. 11 is stored in the memory as a viscous damping coefficient map.

In the present embodiment, in the driving assist mode, the road reaction force characteristic setting unit 43 sets the value of the virtual load viscous damping coefficient c based on, for example, the viscous damping coefficient map that stores the value of the virtual load viscous damping coefficient c(e_{L}) with respect to the lateral deviation e_{L} in FIG. 11 and the lateral deviation e_{L} from the higher-level ECU 201. In the driving assist mode, the road reaction force characteristic setting unit 43 may set, as the virtual load viscous damping coefficient c, a predetermined virtual load viscous damping coefficient value (fixed value) that is set in advance.

In the driving assist mode, the road reaction force characteristic setting unit 43 performs a spring stiffness coefficient setting process for setting the virtual load spring stiffness coefficient k. The spring stiffness coefficient setting process will be described later.

In the driving assist mode, a state in which the vehicle is moving toward a lane boundary (state in which the driver is steering the vehicle so that the vehicle moves toward the lane boundary) will be referred to as "state in which the vehicle is heading toward a departure side." A state in which the vehicle is moving toward the lane center (state in which the vehicle is returning to the lane center) will be referred to as "state in which the vehicle is heading toward a departure avoidance side."

The road reaction force characteristic setting unit 43 determines whether the vehicle is heading toward the departure side or the departure avoidance side based on the lateral deviation e_{L}, the automatic steering command value θ_{AD,cmd}, and the actual steering angle θ. Specifically, this determination is made based on the sign of the lateral deviation e_{L} and a time differential value dΔθ_{A}/dt of an angle deviation Δθ_{A} (= θ - θ_{AD,cmd}) between the actual steering angle θ and the automatic steering command value θ_{AD,cmd}.

When the sign of the lateral deviation e_{L} is negative, that is, the reference vehicle position is rightward of the lane center, and when the time differential value dΔθ_{A}/dt is equal to or larger than a predetermined threshold value β (β > 0), the road reaction force characteristic setting unit 43 determines that the vehicle is heading toward the departure avoidance side.

When the sign of the lateral deviation e_{L} is negative and when the time differential value dΔθ_{A}/dt is not equal to or larger than β (β > 0), that is, the time differential value dΔθ_{A}/dt is larger than -β and smaller than β or the time differential value dΔθ_{A}/dt is equal to or smaller than -β, the road reaction force characteristic setting unit 43 determines that the vehicle is heading toward the departure side.

The reason for setting the predetermined threshold value β is to prevent frequent switching between the state in which the vehicle is heading toward the departure avoidance side and the state in which the vehicle is heading toward the departure side within the range in which the time differential value dΔθ_{A}/dt is equal to or smaller than the threshold value β.

The reason why the road reaction force characteristic setting unit 43 determines that the vehicle is heading toward the departure side when the time differential value dΔθ_{A}/dt is larger than -β and smaller than β is to determine that the vehicle is heading toward the departure side when the reference vehicle position is near the lane center and the vehicle is heading even slightly toward the lane boundary while the driver is holding the steering wheel in the neutral position.

When the time differential value dΔθ_{A}/dt is larger than -β and smaller than β, the road reaction force characteristic setting unit 43 may determine that the vehicle is heading toward the departure avoidance side.

FIGS. 12A, 12B, and 12C are schematic diagrams showing examples of the angle deviation Δθ_{A} between the automatic steering command value θ_{AD,cmd} and the actual steering angle θ when the reference vehicle position is rightward of the lane center.

In FIGS. 12A, 12B, and 12C, the steering angle of a large steering wheel 301 schematically represents the actual steering angle θ, and the steering angle of a small steering wheel 302 schematically represents the automatic steering command value θ_{AD,cmd}.

FIG. 12A is a schematic diagram showing an example of the position of a vehicle 300 when the reference vehicle position is rightward of a lane center 313. Reference numeral 311 represents a lane marking line on a left lane boundary, and reference numeral 312 represents a lane marking line on a right lane boundary. In this case, the sign of the lateral deviation e_{L} is negative.

FIG. 12B is a schematic diagram showing an example of the actual steering angle θ, the automatic steering command value θ_{AD,cmd}, and the angle deviation Δθ_{A} (= θ - θ_{AD,cmd}). When the actual steering angle θ and the automatic steering command value θ_{AD,cmd} have this relationship and, for example, the driver turns the steering wheel in the leftward steering direction (positive direction), the angle deviation Δθ_{A} increases and the time differential value dΔθ_{A}/dt becomes positive.

When the actual steering angle θ and the automatic steering command value θ_{AD,cmd} have this relationship and, for example, the driver turns the steering wheel in the rightward steering direction (negative direction), the angle deviation Δθ_{A} decreases and the time differential value dΔθ_{A}/dt becomes negative.

FIG. 12C is a schematic diagram showing an example of the actual steering angle θ, the automatic steering command value θ_{AD,cmd}, and the angle deviation Δθ_{A} (= θ - θ_{AD,cmd}). When the actual steering angle θ and the automatic steering command value θ_{AD,cmd} have this relationship and, for example, the driver turns the steering wheel in the leftward steering direction (positive direction), the angle deviation Δθ_{A} increases (toward 0) and the time differential value dΔθ_{A}/dt becomes positive.

When the actual steering angle θ and the automatic steering command value θ_{AD,cmd} have this relationship and, for example, the driver turns the steering wheel in the rightward steering direction (negative direction), the angle deviation Δθ_{A} decreases (away from 0) and the time differential value dΔθ_{A}/dt becomes negative.

When the sign of the lateral deviation e_{L} is positive, that is, the reference vehicle position is leftward of the lane center, and when the time differential value dΔθ_{A}/dt is equal to or smaller than -β, the road reaction force characteristic setting unit 43 determines that the vehicle is heading toward the departure avoidance side.

When the sign of the lateral deviation e_{L} is positive and when the time differential value dΔθ_{A}/dt is not equal to or smaller than -β, that is, the time differential value dΔθ_{A}/dt is larger than -β and smaller than β or the time differential value dΔθ_{A}/dt is equal to or larger than β, the road reaction force characteristic setting unit 43 determines that the vehicle is heading toward the departure side.

When the time differential value dΔθ_{A}/dt is larger than -β and smaller than β, the road reaction force characteristic setting unit 43 determines that the vehicle is heading toward the departure side for the reason described above.

When the time differential value dΔθ_{A}/dt is larger than -β and smaller than β, the road reaction force characteristic setting unit 43 may determine that the vehicle is heading toward the departure avoidance side.

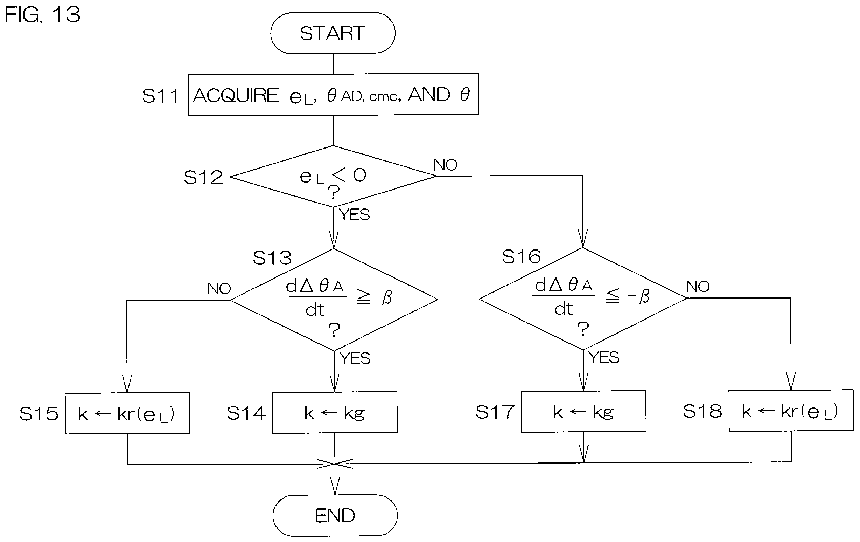

FIG. 13 is a flowchart showing the procedure of the spring stiffness coefficient setting process performed by the road reaction force characteristic setting unit 43 in the driving assist mode. The spring stiffness coefficient setting process shown in FIG. 13 is started every time the driving assist mode is started, and is repeatedly performed at every predetermined calculation cycle until the driving assist mode is terminated.

The road reaction force characteristic setting unit 43 first acquires the lateral deviation e_{L} and the automatic steering command value θ_{AD,cmd} provided from the higher-level ECU 201 and the actual steering angle θ calculated by the reduction ratio division unit 42 (step S11).

Next, the road reaction force characteristic setting unit 43 determines whether the lateral deviation e_{L} is smaller than 0 (step S12). In other words, the road reaction force characteristic setting unit 43 determines whether the sign of the lateral deviation e_{L} is negative.

When the lateral deviation e_{L} is smaller than 0 (step S12: YES), the road reaction force characteristic setting unit 43 determines whether the time differential value dΔθ_{A}/dt of the angle deviation Δθ_{A} (= θ - θ_{AD,cmd}) between the actual steering angle θ and the automatic steering command value θ_{AD,cmd} is equal to or larger than β (step S13).

When the time differential value dΔθ_{A}/dt is equal to or larger than β (step S13: YES), the road reaction force characteristic setting unit 43 determines that the vehicle is heading toward the departure avoidance side, and sets the second virtual load spring stiffness coefficient kg as the virtual load spring stiffness coefficient k (step S14). Then, the process in the current calculation cycle ends.

When determination is made in step S13 that the time differential value dΔθ_{A}/dt is smaller than β (step S13: NO), the road reaction force characteristic setting unit 43 determines that the vehicle is heading toward the departure side, and sets the first virtual load spring stiffness coefficient kr(e_{L}) as the virtual load spring stiffness coefficient k (step S15).

Specifically, the road reaction force characteristic setting unit 43 sets the value of the first virtual load spring stiffness coefficient kr(e_{L}) corresponding to the lateral deviation e_{L} as the virtual load spring stiffness coefficient k based on the first spring stiffness coefficient map that stores the value of the first virtual load spring stiffness coefficient kr(e_{L}) with respect to the lateral deviation e_{L} in FIG. 10 and the lateral deviation e_{L} acquired in step S11. Then, the process in the current calculation cycle ends.

When determination is made in step S12 that the lateral deviation e_{L} is equal to or larger than 0 (step S12: NO), the road reaction force characteristic setting unit 43 determines whether the time differential value dΔθ_{A}/dt is equal to or smaller than -β (step S16).

When the time differential value dΔθ_{A}/dt is equal to or smaller than -β (step S16: YES), the road reaction force characteristic setting unit 43 determines that the vehicle is heading toward the departure avoidance side, and sets the second virtual load spring stiffness coefficient kg as the virtual load spring stiffness coefficient k (step S17). Then, the process in the current calculation cycle ends.

When determination is made in step S16 that the time differential value dΔθ_{A}/dt is larger than -β (step S16: NO), the road reaction force characteristic setting unit 43 determines that the vehicle is heading toward the departure side, and sets the first virtual load spring stiffness coefficient kr(e_{L}) as the virtual load spring stiffness coefficient k (step S18). Then, the process in the current calculation cycle ends.

When the first virtual load spring stiffness coefficient kr(e_{L}) was set as the virtual load spring stiffness coefficient k in the previous calculation cycle in step S14, S17, it is preferable to gradually reduce the virtual load spring stiffness coefficient k from the previous value of the virtual load spring stiffness coefficient k to the value of the second virtual load spring stiffness coefficient kg.

When the second virtual load spring stiffness coefficient kg was set as the virtual load spring stiffness coefficient k in the previous calculation cycle in step S15, S18, it is similarly preferable to gradually increase the virtual load spring stiffness coefficient k from the previous value of the virtual load spring stiffness coefficient k to the value of the first virtual load spring stiffness coefficient kr(e_{L}).

When the driving mode is the normal mode, the first weight W1 is set to 1 and the second weight W2 is set to 0. Therefore, the manual steering command value θ_{MD,cmd} is not reflected in the motor torque command value T_{m,cmd}. In other words, the steering reaction force based on the manual steering command value θ_{MD,cmd} is not reflected. In the present embodiment, however, in order to enable the manual steering command value generation unit 45 to continue the calculation operation for the manual steering command value θ_{MD,cmd} even in the normal mode, the road reaction force characteristic setting unit 43 sets the virtual load spring stiffness coefficient k and the virtual load viscous damping coefficient c.

Specifically, when the driving mode is the normal mode, the road reaction force characteristic setting unit 43 sets the virtual load spring stiffness coefficient k to a predetermined value k_{M} that is set in advance, and sets the virtual load viscous damping coefficient c to a predetermined value c_{M} that is set in advance. For example, k_{M} may be set to k1 in FIG. 10. For example, c_{M} may be set to c1 in FIG. 11.

The operation of the manual steering command value generation unit 45 may be stopped in the normal mode. In this case, the road reaction force characteristic setting unit 43 need not set the virtual load spring stiffness coefficient k and the virtual load viscous damping coefficient c in the normal mode.

In the above configuration, when determination is made that the vehicle is heading toward the departure side in the driving assist mode, the first virtual load spring stiffness coefficient kr(e_{L}) is set as the virtual load spring stiffness coefficient k. When determination is made that the vehicle is heading toward the departure avoidance side, the second virtual load spring stiffness coefficient kg is set as the virtual load spring stiffness coefficient k.

Thus, it is possible to set the virtual load spring stiffness coefficient k appropriate for each of the state in which the vehicle is heading toward the departure side and the state in which the vehicle is heading toward the departure avoidance side. Accordingly, it is possible to generate the steering reaction force appropriate for each of the state in which the vehicle is heading toward the departure side and the state in which the vehicle is heading toward the departure avoidance side. That is, in the first embodiment, it is possible to apply the steering reaction force to the driver by a novel method in the driving assist mode.

Specifically, when the vehicle is heading toward the departure side, the steering reaction force increases as the distance of the reference vehicle position from the lane center increases. Therefore, the vehicle can effectively avoid departing from the lane. When the vehicle is heading toward the departure avoidance side, the steering reaction force is smaller than that when the vehicle is heading toward the departure side. Therefore, the vehicle behavior is stabilized and the sense of discomfort felt by the driver is reduced.

As shown in FIG. 10, it is preferable that the second virtual load spring stiffness coefficient kg be smaller than the first virtual load spring stiffness coefficient kr(e_{L}).

In the first embodiment, when the reference vehicle position is within α from the lane center, the first weight W1 is set to 1 and the second weight W2 is set to 0. Therefore, the manual steering command value θ_{MD,cmd} is not reflected in the motor torque command value T_{m,cmd}. In other words, the steering reaction force based on the manual steering command value θ_{MD,cmd} is not reflected. Even in this case, the vehicle does not depart from the lane because the reference vehicle position is relatively close to the lane center.

In the technology described in Patent Document 1, the control gain is changed based on the yaw angle of the vehicle with respect to the traveling lane. Since there is a delay in detecting the yaw angle relative to the driver's operation, there is a problem in that the timing for changing the control gain in response to the driver's operation is delayed.

In the first embodiment, determination is made as to whether the vehicle is heading toward the departure side or the departure avoidance side based on the time differential value dΔθ_{A}/dt of the angle deviation Δθ_{A} (= θ - θ_{AD,cmd}) between the actual steering angle θ and the automatic steering command value θ_{AD,cmd}, and the virtual load spring stiffness coefficient k is switched based on the determination result. Since the time differential value dΔθ_{A}/dt is unlikely to cause a delay relative to the driver's operation, the virtual load spring stiffness coefficient k can quickly be switched in response to a change in the steering direction by the driver. Thus, the driver can obtain an intuitive steering feel.

[Description of First Modification of Road Reaction Force Characteristic Setting Unit 43]

A first modification of the road reaction force characteristic setting unit 43 will be described. In the first embodiment described above, in the driving assist mode, the virtual load spring stiffness coefficient k is switched between the case where determination is made that the vehicle is heading toward the departure side and the case where determination is made that the vehicle is heading toward the departure avoidance side.

In the first modification of the road reaction force characteristic setting unit 43, in the driving assist mode, both the virtual load spring stiffness coefficient k and the virtual load viscous damping coefficient c are switched between the case where determination is made that the vehicle is heading toward the departure side and the case where determination is made that the vehicle is heading toward the departure avoidance side.

In this case, two types of stiffness coefficient, that is, the first virtual load spring stiffness coefficient kr(e_{L}) and the second virtual load spring stiffness coefficient kg, are prepared as the virtual load spring stiffness coefficient k, and two types of damping coefficient, that is, a first virtual load viscous damping coefficient cr(e_{L}) and a second virtual load viscous damping coefficient cg, are prepared as the virtual load viscous damping coefficient c.

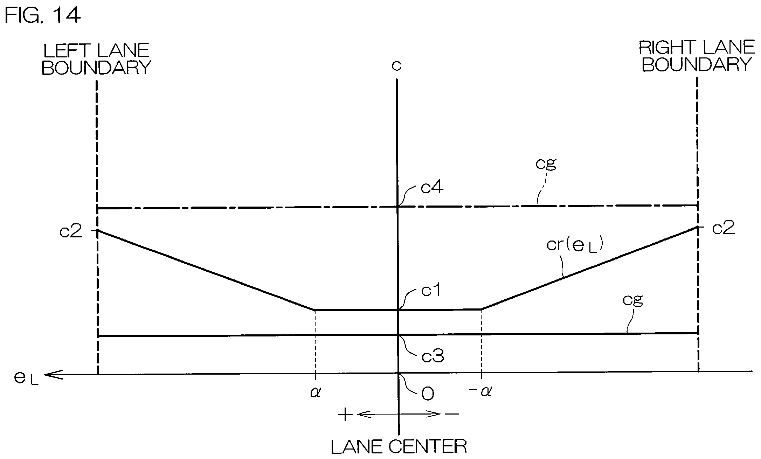

FIG. 14 is a graph showing an example of setting the first virtual load viscous damping coefficient cr(e_{L}) and the second virtual load viscous damping coefficient cg with respect to the lateral deviation e_{L}.

The first virtual load viscous damping coefficient cr(e_{L}) is set to the constant value c1 when the absolute value |e_{L}| of the lateral deviation e_{L} is equal to or smaller than α. c1 is a predetermined value larger than 0. When the absolute value |e_{L}| of the lateral deviation e_{L} is larger than α, the first virtual load viscous damping coefficient cr(e_{L}) is set according to a characteristic that the first virtual load viscous damping coefficient cr(e_{L}) increases from c1 to c2 larger than c1 as the absolute value |e_{L}| of the lateral deviation e_{L} increases. In FIG. 14, the first virtual load viscous damping coefficient cr(e_{L}) changes linearly from c1 to c2, but may change non-linearly.

The second virtual load viscous damping coefficient cg is set to a constant value c3 regardless of the lateral deviation e_{L}. c3 is set to a value larger than 0 and smaller than c1. As shown in FIG. 14, it is preferable that the second virtual load viscous damping coefficient cg be smaller than the first virtual load viscous damping coefficient cr(e_{L}). As shown by the long dashed short dashed line in FIG. 14, however, the second virtual load viscous damping coefficient cg may be set to a value (c4) larger than c1 in order that the steering reaction force can return gentler.

The value of the first virtual load viscous damping coefficient cr(e_{L}) with respect to the lateral deviation e_{L} shown in FIG. 14 is stored in the memory as a first viscous damping coefficient map. The value c3 or c4 of the second virtual load viscous damping coefficient cg shown in FIG. 14 is stored in the memory.

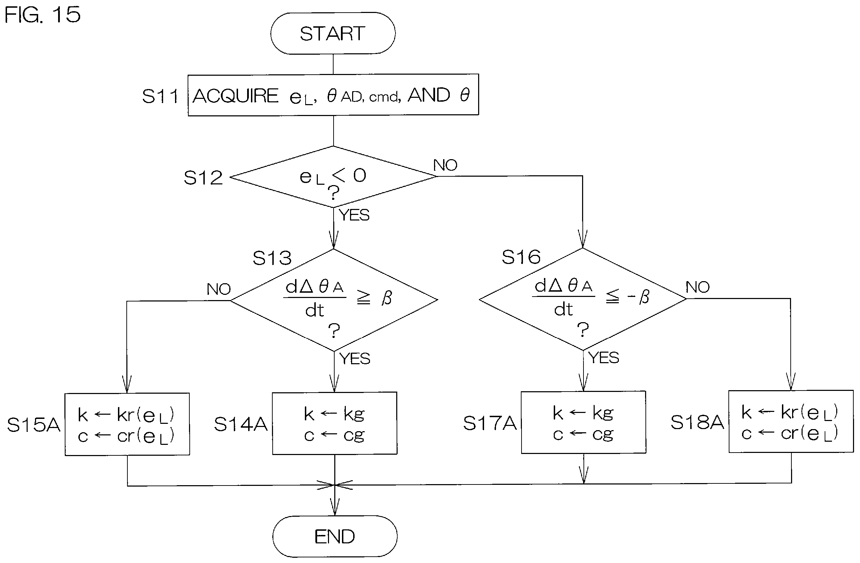

FIG. 15 is a flowchart showing the procedure of a road reaction force characteristic setting process performed by the road reaction force characteristic setting unit 43 according to the first modification in the driving assist mode. The road reaction force characteristic setting process shown in FIG. 15 is started every time the driving assist mode is started, and is repeatedly performed at every predetermined calculation cycle until the driving assist mode is terminated.

In FIG. 15, steps corresponding to the above steps in FIG. 13 are represented by the same step numbers as those in FIG. 13.

Processes of steps S14A, S15A, S17A, and S18A are different from the processes of steps S14, S15, S17, and S18 in FIG. 13, respectively. The other processes of steps S11, S12, S13, and S16 are the same as the processes of steps S11, S12, S13, and S16 in FIG. 13, respectively.

In steps S14A, S17A, the road reaction force characteristic setting unit 43 sets the second virtual load spring stiffness coefficient kg as the virtual load spring stiffness coefficient k, and sets the second virtual load viscous damping coefficient cg as the virtual load viscous damping coefficient c. Then, the process in the current calculation cycle ends.

In steps S15A, S18A, the road reaction force characteristic setting unit 43 sets the first virtual load spring stiffness coefficient kr(e_{L}) as the virtual load spring stiffness coefficient k, and sets the first virtual load viscous damping coefficient cr(e_{L}) as the virtual load viscous damping coefficient c.

Specifically, the road reaction force characteristic setting unit 43 sets the value of the first virtual load spring stiffness coefficient kr corresponding to the lateral deviation e_{L} as the virtual load spring stiffness coefficient k based on the first spring stiffness coefficient map that stores the value of the first virtual load spring stiffness coefficient kr with respect to the lateral deviation e_{L} in FIG. 10 and the lateral deviation e_{L} acquired in step S11.

The road reaction force characteristic setting unit 43 sets the value of the first virtual load viscous damping coefficient cr(e_{L}) corresponding to the lateral deviation e_{L} as the virtual load viscous damping coefficient c based on the first viscous damping coefficient map that stores the value of the first virtual load viscous damping coefficient cr(e_{L}) with respect to the lateral deviation e_{L} in FIG. 14 and the lateral deviation e_{L} acquired in step S11.

The operation of the road reaction force characteristic setting unit 43 in the normal mode is similar to that in the first embodiment described above.

### [Description of Second Modification of Road Reaction Force Characteristic Setting Unit 43]

A second modification of the road reaction force characteristic setting unit 43 will be described. In the first modification of the road reaction force characteristic setting unit 43 described above, in the driving assist mode, the virtual load spring stiffness coefficient k and the virtual load viscous damping coefficient c are switched between the case where determination is made that the vehicle is heading toward the departure side and the case where determination is made that the vehicle is heading toward the departure avoidance side.

In the second modification of the road reaction force characteristic setting unit 43, in the driving assist mode, only the virtual load viscous damping coefficient c is switched between the case where determination is made that the vehicle is heading toward the departure side and the case where determination is made that the vehicle is heading toward the departure avoidance side.

In the driving assist mode, the road reaction force characteristic setting unit 43 sets the value of the virtual load spring stiffness coefficient k based on, for example, the spring stiffness coefficient map that stores the value of the first virtual load spring stiffness coefficient kr(e_{L}) with respect to the lateral deviation e_{L} in FIG. 10 and the lateral deviation e_{L} from the higher-level ECU 201. In the driving assist mode, the road reaction force characteristic setting unit 43 may set, as the virtual load spring stiffness coefficient k, a predetermined virtual load spring stiffness coefficient value (fixed value) that is set in advance.

For example, two types of damping coefficient, that is, the first virtual load viscous damping coefficient cr(e_{L}) and the second virtual load viscous damping coefficient cg shown in FIG. 14, are prepared as the virtual load viscous damping coefficient c. The value of the first virtual load viscous damping coefficient cr(e_{L}) with respect to the lateral deviation e_{L} shown in FIG. 14 is stored in the memory as the first viscous damping coefficient map. The value c3 of the second virtual load viscous damping coefficient cg shown in FIG. 14 is stored in the memory.

In the driving assist mode, the road reaction force characteristic setting unit 43 performs a viscous damping coefficient setting process for setting the virtual load viscous damping coefficient c.

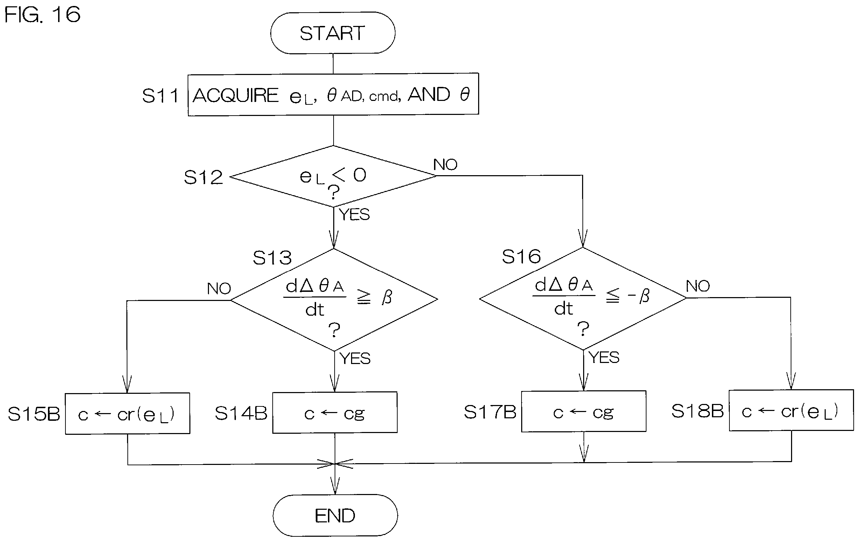

FIG. 16 is a flowchart showing the procedure of the viscous damping coefficient setting process performed by the road reaction force characteristic setting unit 43 in the driving assist mode. The viscous damping coefficient setting process shown in FIG. 16 is started every time the driving assist mode is started, and is repeatedly performed at every predetermined calculation cycle until the driving assist mode is terminated.

In FIG. 16, steps corresponding to the above steps in FIG. 13 are represented by the same step numbers as those in FIG. 13.

Processes of steps S14B, S15B, S17B, and S18B are different from the processes of steps S14, S15, S17, and S18 in FIG. 13, respectively. The other processes of steps S11, S12, S13, and S16 are the same as the processes of steps S11, S12, S13, and S16 in FIG. 13, respectively.

In steps S14B, S17B, the road reaction force characteristic setting unit 43 sets the second virtual load viscous damping coefficient cg as the virtual load viscous damping coefficient c. Then, the process in the current calculation cycle ends.

In steps S15B, S18B, the road reaction force characteristic setting unit 43 sets the first virtual load viscous damping coefficient cr(e_{L}) as the virtual load viscous damping coefficient c.

Specifically, the road reaction force characteristic setting unit 43 sets the value of the first virtual load viscous damping coefficient cr(e_{L}) corresponding to the lateral deviation e_{L} as the first virtual load viscous damping coefficient c based on the viscous damping coefficient map that stores the value of the first virtual load viscous damping coefficient cr(e_{L}) with respect to the lateral deviation e_{L} in FIG. 14 and the lateral deviation e_{L} acquired in step S11.

The operation of the road reaction force characteristic setting unit 43 in the normal mode is similar to that in the first embodiment described above.

### [Description of Modification of Weight Setting Unit 52]

A modification of the weight setting unit 52 will be described. In the first embodiment described above (FIGS. 2 and 9), the weight setting unit 52 sets the first weight W1 and the second weight W2 based on the mode signal S_{mode} and the lateral deviation e_{L}. The weight setting unit 52 according to the modification sets the first weight W1 and the second weight W2 based only on the mode signal S_{mode}.

When the driving mode is the normal mode, the weight setting unit 52 sets the first weight W1 to 1, and sets the second weight W2 to 0. When the driving mode is the driving assist mode, the weight setting unit 52 sets the first weight W1 to 0, and sets the second weight W2 to 1. The rest is similar to the first embodiment described above. That is, the operation of the road reaction force characteristic setting unit 43 is the same as the operation shown in FIG. 13 in the first embodiment described above.

Therefore, in the present modification, similarly to the first embodiment described above, when determination is made that the vehicle is heading toward the departure side in the driving assist mode, the first virtual load spring stiffness coefficient kr(e_{L}) is set as the virtual load spring stiffness coefficient k. When determination is made that the vehicle is heading toward the departure avoidance side, the second virtual load spring stiffness coefficient kg is set as the virtual load spring stiffness coefficient k.

in the present modification, unlike the first embodiment described above, the first weight W1 is set to 0 and the second weight W2 is set to 1 also when the reference vehicle position is within α from the lane center in the driving assist mode. Therefore, the steering reaction force based on the manual steering command value θ_{MD,cmd} is reflected also when the reference vehicle position is within α from the lane center in the driving assist mode.

The weight setting unit 52 according to the modification can be used as the weight setting unit 52 also when the road reaction force characteristic setting unit 43 according to the first modification described above is used as the road reaction force characteristic setting unit 43 (see FIG. 15) or when the road reaction force characteristic setting unit 43 according to the second modification described above is used as the road reaction force characteristic setting unit 43 (see FIG. 16).

### [Description of Second Embodiment]

In a second embodiment, the operation of the weight setting unit 52 and the operation of the road reaction force characteristic setting unit 43 are different from those in the first embodiment described above.

In the second embodiment, similarly to the modification of the weight setting unit 52 described above, when the driving mode is the normal mode, the weight setting unit 52 sets the first weight W1 to 1, and sets the second weight W2 to 0. When the driving mode is the driving assist mode, the weight setting unit 52 sets the first weight W1 to 0, and sets the second weight W2 to 1.

In the second embodiment, in the driving assist mode, the road reaction force characteristic setting unit 43 acquires the lateral deviation e_{L} and the automatic steering command value θ_{AD,cmd} provided from the higher-level ECU 201 and the actual steering angle θ calculated by the reduction ratio division unit 42 at every predetermined calculation cycle. Next, the road reaction force characteristic setting unit 43 determines whether the lateral deviation e_{L} is within a range of -α to +α. Then, the road reaction force characteristic setting unit 43 performs a process based on the determination result. In other words, in the second embodiment, different operations are performed between the case where the lateral deviation e_{L} is within the range of -α to +α and the case where the lateral deviation e_{L} is outside the range of -α to +α.

Specifically, when determination is made that the lateral deviation e_{L} is outside the range of -α to +α, the road reaction force characteristic setting unit 43 performs the processes of step S12 onwards in FIG. 13 in the first embodiment described above. As the virtual load viscous damping coefficient c used at this time, the virtual load viscous damping coefficient c(eL) shown in FIG. 11 may be used, or a predetermined value (fixed value) that is set in advance may be used.

When determination is made that the lateral deviation e_{L} is within the range of -α to +α, the road reaction force characteristic setting unit 43 sets the virtual load spring stiffness coefficient k to a predetermined value that is set in advance (e.g., k1 in FIG. 10) and sets the virtual load viscous damping coefficient c to a predetermined value that is set in advance (e.g., c1 in FIG. 11) without determining whether the vehicle is heading toward the departure avoidance side or the departure side.

The road reaction force characteristic setting unit 43 may perform the following operation depending on the result of the determination as to whether the lateral deviation e_{L} is within the range of -α to +α in the driving assist mode. That is, when determination is made that the lateral deviation e_{L} is outside the range of -α to +α, the road reaction force characteristic setting unit 43 performs the above processes of step S12 onwards in FIG. 15. When determination is made that the lateral deviation e_{L} is within the range of -α to +α, the road reaction force characteristic setting unit 43 sets the virtual load spring stiffness coefficient k and the virtual load viscous damping coefficient c to the predetermined values that are set in advance.

The road reaction force characteristic setting unit 43 may also perform the following operation depending on the result of the determination as to whether the lateral deviation e_{L} is within the range of -α to +α in the driving assist mode. That is, when determination is made that the lateral deviation e_{L} is outside the range of -α to +α, the road reaction force characteristic setting unit 43 performs the above processes of step S12 onwards in FIG. 16. When determination is made that the lateral deviation e_{L} is within the range of -α to +α, the road reaction force characteristic setting unit 43 sets the virtual load spring stiffness coefficient k and the virtual load viscous damping coefficient c to the predetermined values that are set in advance.

In the second embodiment, the lane keeping assist (LKA) is performed when the lateral deviation e_{L} is outside the range of -α to +α, and the lane centering assist (LCA) control is performed when the lateral deviation e_{L} is within the range of -α to +α.

### [Description of Third Embodiment]

In a third embodiment, the operation of the weight setting unit 52 and the operation of the road reaction force characteristic setting unit 43 are different from those in the first embodiment described above.

In the third embodiment, similarly to the modification of the weight setting unit 52 described above, when the driving mode is the normal mode, the weight setting unit 52 sets the first weight W1 to 1, and sets the second weight W2 to 0. When the driving mode is the driving assist mode, the weight setting unit 52 sets the first weight W1 to 0, and sets the second weight W2 to 1.

In the third embodiment, the road reaction force characteristic setting unit 43 performs different operations between the case where the lateral deviation e_{L} is within the range of -α to +α and the case where the lateral deviation e_{L} is outside the range of -α to +α.

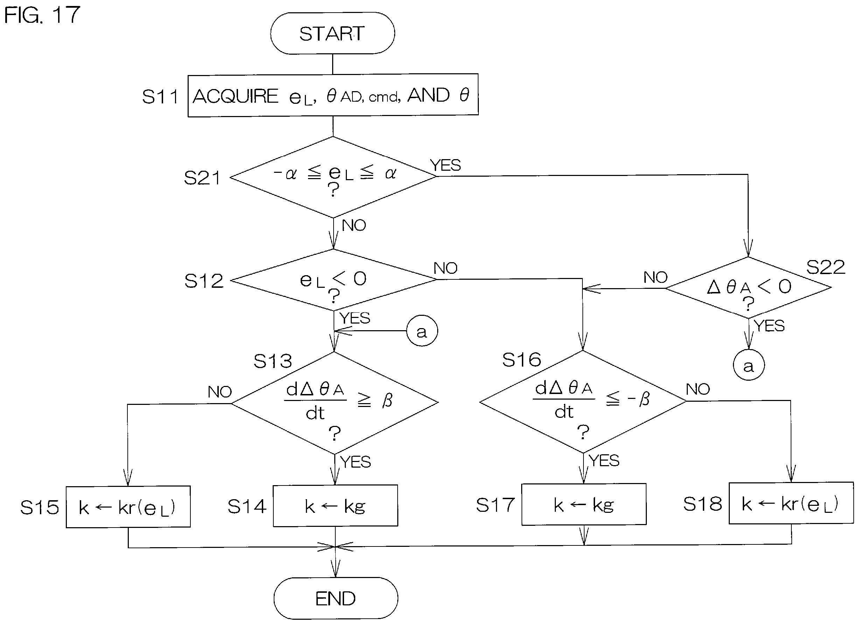

Specifically, in the third embodiment, the road reaction force characteristic setting unit 43 performs a road reaction force characteristic setting process shown in FIG. 17 in the driving assist mode. In FIG. 17, the same steps as those in FIG. 13 are represented by the same step numbers as those in FIG. 13. The road reaction force characteristic setting process shown in FIG. 17 is started every time the driving assist mode is started, and is repeatedly performed at every predetermined calculation cycle until the driving assist mode is terminated.

The road reaction force characteristic setting unit 43 first acquires the lateral deviation e_{L} and the automatic steering command value θ_{AD,cmd} provided from the higher-level ECU 201 and the actual steering angle θ calculated by the reduction ratio division unit 42 (step S11).

Next, the road reaction force characteristic setting unit 43 determines whether the lateral deviation e_{L} is within a range of -α ≤ e_{L} ≤ +α (step S21). In other words, the road reaction force characteristic setting unit 43 determines whether the lateral deviation e_{L} is within the range of -α to +α.

When determination is made that the lateral deviation e_{L} is outside the range of -α ≤ e_{L} ≤ +α (step S21: NO), the road reaction force characteristic setting unit 43 proceeds to step S12. Specifically, the road reaction force characteristic setting unit 43 determines whether the lateral deviation e_{L} is smaller than 0. The processes of steps S12 to S18 are the same as the processes of steps S12 to S18 in FIG. 13, respectively, and therefore will not be described in detail.

When determination is made in step S21 that the lateral deviation e_{L} is within the range of -α ≤ e_{L} ≤ +α (step S21: YES), the road reaction force characteristic setting unit 43 determines whether the angle deviation Δθ_{A} (= θ - θ_{AD,cmd}) between the actual steering angle θ and the automatic steering command value θ_{AD,cmd} is smaller than 0 (step S22). In other words, the road reaction force characteristic setting unit 43 determines whether the sign of the angle deviation Δθ_{A} is negative.

When the angle deviation Δθ_{A} is smaller than 0 (step S22: YES), the road reaction force characteristic setting unit 43 proceeds to step S13.

When the angle deviation Δθ_{A} is equal to or larger than 0 (step S22: NO), the road reaction force characteristic setting unit 43 proceeds to step S16.

When determination is made in FIG. 17 that the lateral deviation e_{L} is outside the range of -α ≤ e_{L} ≤ +α, the same process as the process shown in FIG. 13 is performed. In this case, determination is made as to whether the vehicle is heading toward the departure side or the departure avoidance side based on the lateral deviation e_{L} and the time differential value dΔθ_{A}/dt of the angle deviation Δθ_{A} (= θ - θ_{AD,cmd}).

When determination is made that the lateral deviation e_{L} is within the range of -α ≤ e_{L} ≤ +α, however, determination is made as to whether the angle deviation Δθ_{A} (= θ - θ_{AD,cmd}) is smaller than 0. In this respect, the process in FIG. 17 is different from the process shown in FIG. 13. In this case, determination is made as to whether the vehicle is heading toward the departure side or the departure avoidance side based on the angle deviation Δθ_{A} (= θ - θ_{AD,cmd}) and the time differential value dΔθ_{A}/dt thereof.

The difference between the process to be performed when determination is made that the lateral deviation e_{L} is outside the range of -α ≤ e_{L} ≤ +α and the process to be performed when determination is made that the lateral deviation e_{L} is within the range of -α ≤ e_{L} ≤ +α will be described in detail with reference to FIGS. 12B and 12C.

A state in which the actual steering angle θ and the automatic steering command value θ_{AD,cmd} have the relationship in FIG. 12C (the vehicle is rightward of the lane center and θ - θ_{AD,cmd} < 0) and the lateral deviation e_{L} is within the range of -α ≤ e_{L} ≤ +α will be referred to as a first state. In the first state, the angle deviation Δθ_{A} increases and the time differential value dΔθ_{A}/dt becomes positive, for example, when the driver turns the steering wheel in the leftward steering direction (positive direction). In this case, the result is YES in step S21 in FIG. 17, the result is YES in step S22, and the result is YES in step S13 when the time differential value dΔθ_{A}/dt exceeds the threshold value β. Thus, determination is made that the vehicle is heading toward the departure avoidance side, and the second virtual load spring stiffness coefficient kg is set as the virtual load spring stiffness coefficient k. That is, the result is the same as that in the process (process in FIG. 13) when determination is made that the lateral deviation e_{L} is outside the range of -α ≤ e_{L} ≤ +α.

In the first state, the angle deviation Δθ_{A} decreases and the time differential value dΔθ_{A}/dt becomes negative, for example, when the driver turns the steering wheel in the rightward steering direction (negative direction). In this case, the result is YES in step S21 in FIG. 17, the result is YES in step S22, and the result is NO in step S13. Thus, determination is made that the vehicle is heading toward the departure side, and the first virtual load spring stiffness coefficient kr(e_{L}) is set as the virtual load spring stiffness coefficient k. That is, the result is the same as that in the process (process in FIG. 13) when determination is made that the lateral deviation e_{L} is outside the range of -α ≤ e_{L} ≤ +α.

A state in which the actual steering angle θ and the automatic steering command value θ_{AD,cmd} have the relationship in FIG. 12B (the vehicle is rightward of the lane center and θ - θ_{AD,cmd} ≥ 0) and the lateral deviation e_{L} is within the range of -α ≤ e_{L} ≤ +α will be referred to as a second state. In the second state, the angle deviation Δθ_{A} increases and the time differential value dΔθ_{A}/dt becomes positive, for example, when the driver turns the steering wheel in the leftward steering direction (positive direction). In this case, the result is YES in step S21 in FIG. 17, the result is NO in step S22, and the result is NO in step S16. Thus, determination is made that the vehicle is heading toward the departure side, and the first virtual load spring stiffness coefficient kr(e_{L}) is set as the virtual load spring stiffness coefficient k.

In this case, the result is different from that in the process (process in FIG. 13) when determination is made that the lateral deviation e_{L} is outside the range of -α ≤ e_{L} ≤ +α. That is, when the lateral deviation e_{L} is within the range of -α to +α and the driver gives an actual steering angle θ that further exceeds the automatic steering command value θ_{AD,cmd}, determination is made that the vehicle is heading toward the departure side. In other words, when the driver returns the steering wheel excessively to increase the possibility that the vehicle will move over the lane center, determination is made that the vehicle is heading toward the departure side.
In the second state, the angle deviation Δθ_{A} decreases and the time differential value dΔθ_{A}/dt becomes negative, for example, when the driver turns the steering wheel in the rightward steering direction (negative direction). In this case, the result is YES in step S21 in FIG. 17, the result is NO in step S22, and the result is YES in step S16 when the time differential value dΔθ_{A}/dt is below the threshold value -β. Thus, determination is made that the vehicle is heading toward the departure avoidance side, and the second virtual load spring stiffness coefficient kg is set as the virtual load spring stiffness coefficient k. In this case, the result is different from that in the process (process in FIG. 13) when determination is made that the lateral deviation e_{L} is outside the range of -α ≤ e_{L} ≤ +α.

The road reaction force characteristic setting unit 43 may perform the processes of steps S14A, S15A, S17A, and S18A in FIG. 15 instead of the processes of steps S14, S15, S17, and S18 in FIG. 17.

The road reaction force characteristic setting unit 43 may also perform the processes of steps S14B, S15B, S17B, and S18B in FIG. 16 instead of the processes of steps S14, S15, S17, and S18 in FIG. 17.

### [Description of Fourth Embodiment]

In a fourth embodiment, the operation of the weight setting unit 52 and the operation of the road reaction force characteristic setting unit 43 are different from those in the first embodiment described above.

In the fourth embodiment, similarly to the modification of the weight setting unit 52 described above, when the driving mode is the normal mode, the weight setting unit 52 sets the first weight W1 to 1, and sets the second weight W2 to 0. When the driving mode is the driving assist mode, the weight setting unit 52 sets the first weight W1 to 0, and sets the second weight W2 to 1.

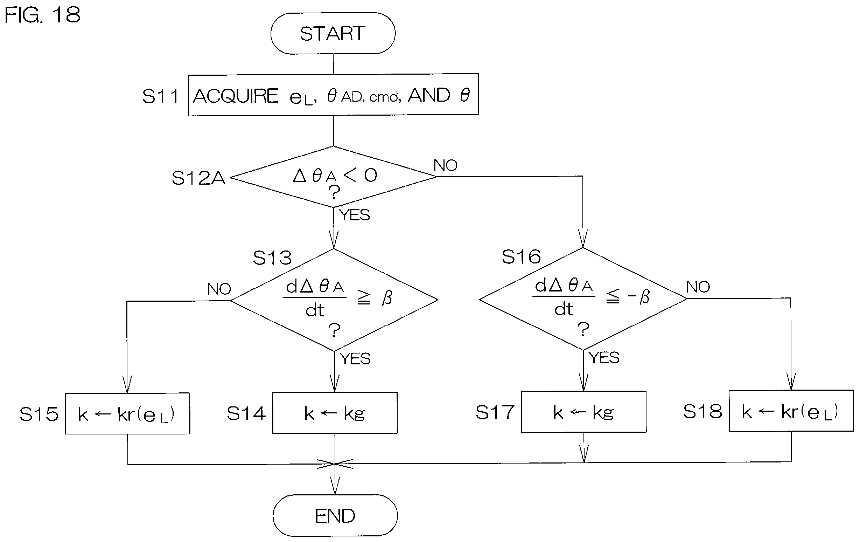

In the fourth embodiment, the road reaction force characteristic setting unit 43 performs a road reaction force characteristic setting process shown in FIG. 18 in the driving assist mode. In FIG. 18, the same steps as those in FIG. 13 are represented by the same step numbers as those in FIG. 13. The road reaction force characteristic setting process shown in FIG. 18 is started every time the driving assist mode is started, and is repeatedly performed at every predetermined calculation cycle until the driving assist mode is terminated.

Step S12A in FIG. 18 is different from step S12 in FIG. 13. That is, in the road reaction force characteristic setting process in FIG. 18, the road reaction force characteristic setting unit 43 determines in step S12A whether the angle deviation Δθ_{A} (= θ - θ_{AD,cmd}) between the actual steering angle θ and the automatic steering command value θ_{AD,cmd} is smaller than 0. When determination is made that the angle deviation Δθ_{A} is smaller than 0, the road reaction force characteristic setting unit 43 proceeds to step S13. When determination is made that the angle deviation Δθ_{A} is equal to or larger than 0, the road reaction force characteristic setting unit 43 proceeds to step S16. Processes other than step S12 in FIG. 13 are the same as the processes described in the first embodiment.

As the virtual load viscous damping coefficient c used in the driving assist mode, the virtual load viscous damping coefficient c(e_{L}) shown in FIG. 11 may be used, or a predetermined value (fixed value) that is set in advance may be used.

The road reaction force characteristic setting unit 43 may perform the processes of steps S14A, S15A, S17A, and S18A in FIG. 15 instead of the processes of steps S14, S15, S17, and S18 in FIG. 18.

The road reaction force characteristic setting unit 43 may also perform the processes of steps S14B, S15B, S17B, and S18B in FIG. 16 instead of the processes of steps S14, S15, S17, and S18 in FIG. 18.

### [Description of Modification of Motor Control ECU]

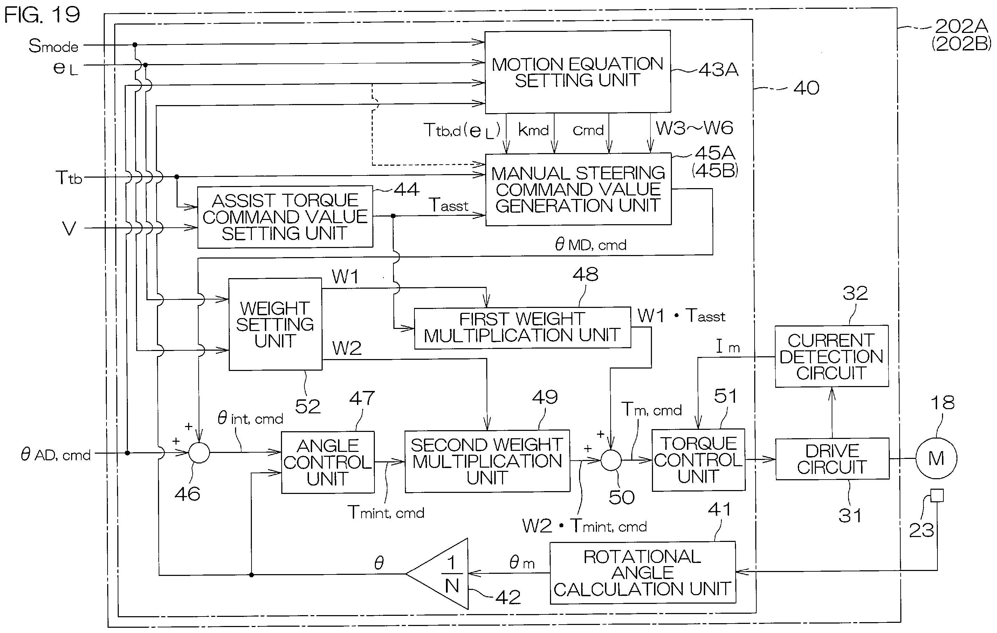

FIG. 19 is a block diagram showing a first modification of the motor control ECU. In FIG. 19, portions corresponding to those in FIG. 2 described above are represented by the same signs as those in FIG. 2.

A motor control ECU 202A in FIG. 19 is different from the motor control ECU 202 in FIG. 2 in terms of (1) and (2) below.
(1) A motion equation setting unit 43A is provided in place of the road reaction force characteristic setting unit 43 in FIG. 2.
(2) The configuration of a manual steering command value generation unit 45A is different from the configuration of the manual steering command value generation unit 45 in FIG. 2.

The motion equation setting unit 43A sets a target virtual spring reaction force T_{tb,d}(e_{L}) based on the lateral deviation e_{L} provided from the higher-level ECU 201. The motion equation setting unit 43A sets a virtual load spring stiffness coefficient k_{md} and a virtual load viscous damping coefficient c_{md} to be used by the manual steering command value generation unit 45A. The motion equation setting unit 43A sets third to sixth weights W3 to W6 to be used by the manual steering command value generation unit 45A. In the driving assist mode, the motion equation setting unit 43A performs a coefficient/weight setting process described later.

When the driving mode is the normal mode, the weight setting unit 52 sets the first weight W1 to 1, and sets the second weight W2 to 0. When the driving mode is the driving assist mode, the weight setting unit 52 sets the first weight W1 to 0, and sets the second weight W2 to 1.

Therefore, when the driving mode is the normal mode, the assist torque Tₐₛₛₜ set by the assist torque command value setting unit 44 is provided to the torque control unit 51 as the motor torque command value T_{m,cmd}. When the driving mode is the driving assist mode, the integrated motor torque command value T_{mint,cmd} calculated by the angle control unit 47 is provided to the torque control unit 51 as the motor torque command value T_{m,cmd}.

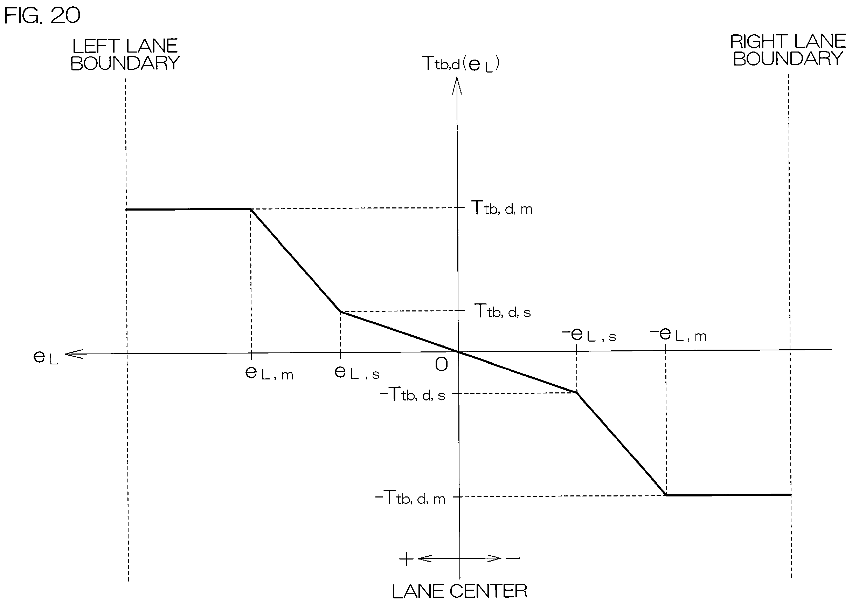

FIG. 20 is a graph showing an example of setting the target virtual spring reaction force T_{tb,d}(e_{L}) with respect to the lateral deviation e_{L}.

When the lateral deviation e_{L} ranges from -e_{L,s} (e_{L,s} > 0) to e_{L,s}, the target virtual spring reaction force T_{tb,d}(e_{L}) is set to increase from -T_{tb,d,s} (T_{tb,d,s} > 0) to T_{tb,d,s} as the lateral deviation e_{L} increases. In this example, the target virtual spring reaction force T_{tb,d}(e_{L}) changes linearly, but may change non-linearly. In this example, e_{L,s} is set to a predetermined value larger than zero and smaller than a half of the width of the traveling lane.

When the lateral deviation e_{L} ranges from e_{L,s} to e_{L,m} (e_{L,m} > e_{L,s}), the target virtual spring reaction force T_{tb,d}(e_{L}) is set to increase from T_{tb,d,s} to T_{tb,d,m} (T_{tb,d,m} > T_{tb,d,s}) as the lateral deviation e_{L} increases. When the lateral deviation e_{L} ranges from e_{L,s} to e_{L,m}, the slope of the straight line representing the target virtual spring reaction force T_{tb,d}(e_{L}) is set larger than that when the lateral deviation e_{L} ranges from -e_{L,s} to e_{L,s}. In this example, the target virtual spring reaction force T_{tb,d}(e_{L}) changes linearly, but may change non-linearly. In a range in which the lateral deviation e_{L} is larger than e_{L,m}, the target virtual spring reaction force T_{tb,d}(e_{L}) is set to T_{tb,d,m}.

When the lateral deviation e_{L} ranges from -e_{L,s} to -e_{L,m} (-e_{L,m} < -e_{L,s}), the target virtual spring reaction force T_{tb,d}(e_{L}) is set to decrease from -T_{tb,d,s} to -T_{tb,d,m} (-T_{tb,d,m} < -T_{tb,d,s}) as the lateral deviation e_{L} decreases. When the lateral deviation e_{L} ranges from -e_{L,s} to -e_{L,m}, the slope of the straight line representing the target virtual spring reaction force T_{tb,d}(e_{L}) is set larger than that when the lateral deviation e_{L} ranges from -e_{L,s} to e_{L,s}. In this example, the target virtual spring reaction force T_{tb,d}(e_{L}) changes linearly, but may change non-linearly. In a range in which the lateral deviation e_{L} is smaller than -e_{L,m}, the target virtual spring reaction force T_{tb,d}(e_{L}) is set to -T_{tb,d,m}.

The target virtual spring reaction force T_{tb,d}(e_{L}) set by the motion equation setting unit 43A is provided to the manual steering command value generation unit 45A.

In the present modification, two types of stiffness coefficient, that is, the first virtual load spring stiffness coefficient kr and the second virtual load spring stiffness coefficient kg, are prepared as the virtual load spring stiffness coefficient k_{md} to be used in the driving assist mode.

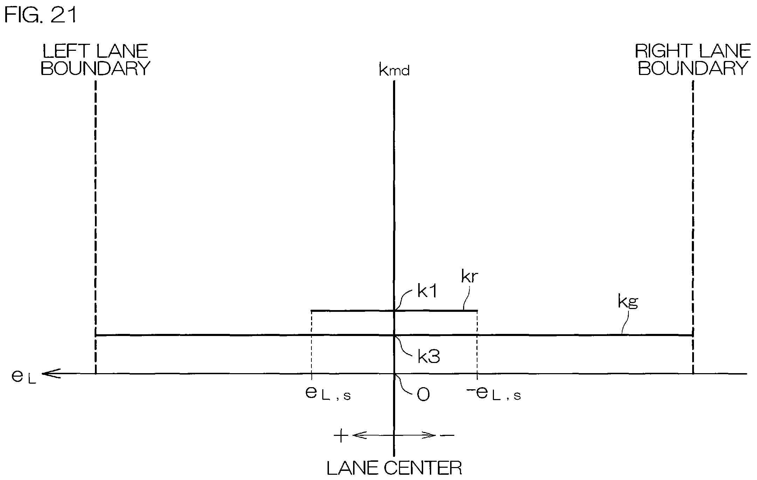

FIG. 21 is a graph showing an example of setting the first virtual load spring stiffness coefficient kr and the second virtual load spring stiffness coefficient kg with respect to the lateral deviation e_{L}.

The first virtual load spring stiffness coefficient kr is set only in a range in which the absolute value |e_{L}| of the lateral deviation e_{L} is equal to or smaller than e_{L,s} in FIG. 20. The first virtual load spring stiffness coefficient kr is set to the constant value k1 regardless of the lateral deviation e_{L}. k1 is a predetermined value larger than 0. The second virtual load spring stiffness coefficient kg is set to the constant value k3 regardless of the lateral deviation e_{L}. k3 is set to a value larger than 0 and smaller than k1. The value k1 of the first virtual load spring stiffness coefficient kr and the value k3 of the second virtual load spring stiffness coefficient kg shown in FIG. 21 are stored in the memory.

In the present modification, two types of damping coefficient, that is, the first virtual load viscous damping coefficient cr(e_{L}) and the second virtual load viscous damping coefficient cg, are prepared as the virtual load viscous damping coefficient c_{md} to be used in the driving assist mode.

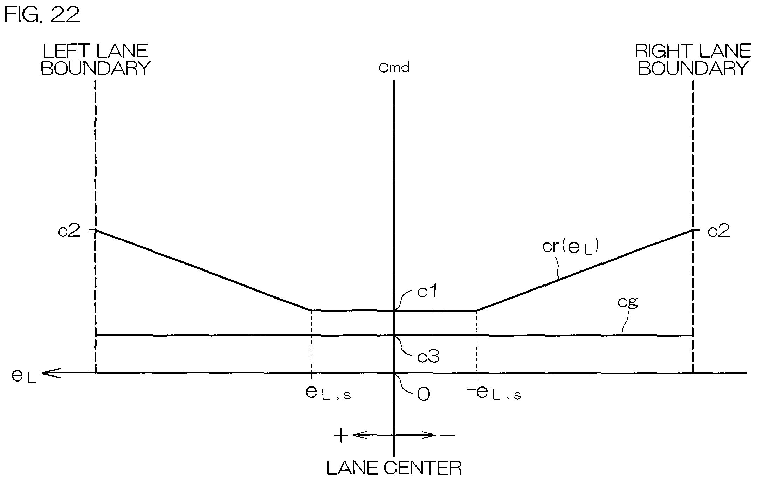

FIG. 22 is a graph showing an example of setting the first virtual load viscous damping coefficient cr(e_{L}) and the second virtual load viscous damping coefficient cg with respect to the lateral deviation e_{L}.

The first virtual load viscous damping coefficient c(e_{L}) is set to the constant value c1 when the absolute value |e_{L}| of the lateral deviation e_{L} is equal to or smaller than e_{L,s}. c1 is a predetermined value larger than 0. When the absolute value |e_{L}| of the lateral deviation e_{L} is larger than e_{L,s}, the first virtual load viscous damping coefficient c(e_{L}) is set according to a characteristic that the first virtual load viscous damping coefficient c(e_{L}) increases from c1 to c2 larger than c1 as the absolute value |e_{L}| of the lateral deviation e_{L} increases. In FIG. 22, the first virtual load viscous damping coefficient c(e_{L}) changes linearly from c1 to c2, but may change non-linearly.

The second virtual load viscous damping coefficient cg is set to the constant value c3 regardless of the lateral deviation e_{L}. c3 is set to a value larger than 0 and smaller than c1.

The value of the first virtual load viscous damping coefficient c(e_{L}) with respect to the lateral deviation e_{L} shown in FIG. 22 is stored in the memory as the viscous damping coefficient map. The value c3 of the second virtual load viscous damping coefficient cg shown in FIG. 22 is stored in the memory.

The operation of the manual steering command value generation unit 45A will be described.

First, description will be given of a method for setting the manual steering command value θ_{MD,cmd} by a manual steering command value generation unit described in Patent Document 2 (WO 2023/286169) (hereinafter referred to as "comparative manual steering command value generation unit").

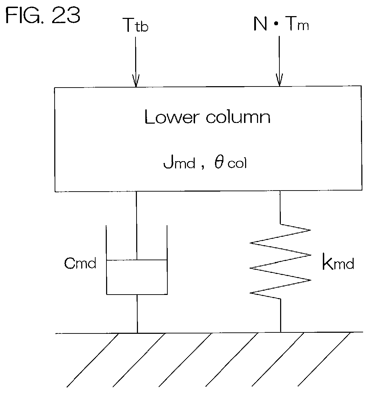

The comparative manual steering command value generation unit generates the manual steering command value θ_{MD,cmd} using a reference EPS model in FIG. 23. The reference EPS model in FIG. 23 is an example of "reference model of steering device" according to the present disclosure.

The reference EPS model is a single inertia model including a lower column. The lower column corresponds to the output shaft 9 and the worm wheel 21. However, this model is merely an example, and an inertia model including a component other than the above (e.g., a rack bar) may also be used. In FIG. 23, J_{md} is the inertia of the lower column (hereinafter referred to as "column inertia"), θ_{col} is the rotational angle of the lower column, and T_{tb} is the torsion bar torque. The torsion bar torque T_{tb}, torque N·Tₘ acting on the output shaft 9 from the electric motor 18, and the road reaction torque (virtual reaction force) Tᵣₗ are applied to the lower column.

The road reaction torque Tᵣₗ is given by expression (10) below using the virtual load spring stiffness coefficient k_{md} that is the stiffness coefficient of a virtual spring and the virtual load viscous damping coefficient c_{md} that is the viscous damping coefficient of a virtual damper.
[Math. 8] ${T}_{rl} = - {k}_{md} ⋅ {θ}_{col} - {c}_{md} ⋅ {\dot{θ}}_{col}$

The virtual load spring stiffness coefficient k_{md} and the virtual load viscous damping coefficient c_{md} are determined through experiments, analyses, etc. in advance. Hereinafter, k_{md}·θ_{col} may be referred to as a virtual spring reaction force, and c_{md}(dθ_{col}/dt) may be referred to as a virtual damper reaction force.

An equation of motion of the reference EPS model is given by expression (11) below.
[Math. 9] ${J}_{md} ⋅ {{θ}^{¨}}_{col} = {T}_{tb} + N ⋅ {T}_{m} - {k}_{md} ⋅ {θ}_{col} - {c}_{md} ⋅ {\dot{θ}}_{col}$

In expression (11), J_{md}·d²θ_{col}/dt² is the moment of inertia acting on the lower column.

The comparative manual steering command value generation unit calculates the rotational angle θ_{col} of the lower column by solving the differential equation given by expression (11) by substituting the torsion bar torque T_{tb} detected by the torque sensor 12 into T_{tb} and substituting the assist torque command value Tₐₛₛₜ set by the assist torque command value setting unit 44 into Tₘ. The comparative manual steering command value generation unit generates the obtained rotational angle θ_{col} of the lower column as the manual steering command value θ_{MD,cmd}. The method of setting the manual steering command value θ_{MD,cmd} in this way will be referred to as a comparative method.

The equation of motion given by expression (11) is equivalent to an equation of motion in which Tₘ is replaced by Tₐₛₛₜ and θ_{col} is replaced by θ_{MD,cmd}.

In the comparative method, a value obtained by multiplying the virtual load spring stiffness coefficient k_{md} by the rotational angle θ_{col} (manual steering command value θ_{MD,cmd}) of the lower column J_{md} is used as the virtual spring reaction force. Therefore, even if a value corresponding to the lateral position for the reference vehicle position is used as the virtual load spring stiffness coefficient k_{md}, torque corresponding to the lateral position for the reference vehicle position cannot be set as the virtual spring reaction force. For this reason, in a cooperative control mode in the comparative method, the virtual spring reaction force k_{md}·θ_{col} (= k_{md}·θ_{MD,cmd}) is a reaction force that depends on situations.

In the present modification, the manual steering command value generation unit 45A calculates the manual steering command value θ_{MD,cmd} using the equation of motion (expression (11)) of the reference EPS model described above. Specifically, in the present modification, the manual steering command value generation unit 45A calculates the manual steering command value θ_{MD,cmd} using an equation of motion obtained by modifying the equation of motion (expression (11)) of the reference EPS model described above.

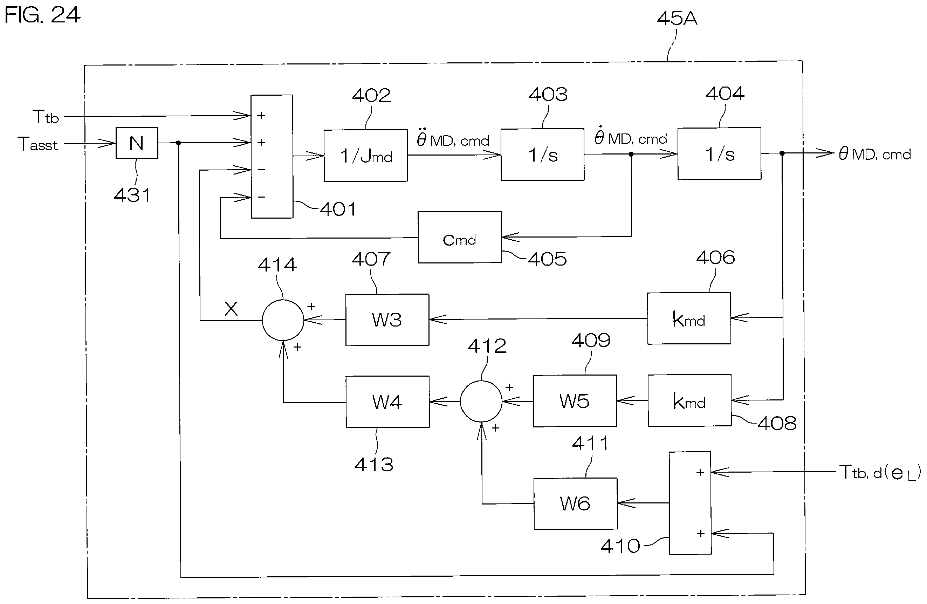

FIG. 24 is a block diagram showing the configuration of the manual steering command value generation unit 45A.

In FIG. 24, J_{md} is the column inertia. s is a differential operator. θ_{MD,cmd} is the manual steering command value, and corresponds to the rotational angle θ_{col} of the lower column in the comparative method. k_{md} is the virtual load spring stiffness coefficient, and is set by the motion equation setting unit 43A. c_{md} is the virtual load viscous damping coefficient, and is set by the motion equation setting unit 43A. Tₐₛₛₜ is the assist torque command value set by the assist torque command value setting unit 44.

The manual steering command value generation unit 45A includes a reduction ratio multiplication unit 431, an addition/subtraction unit 401, an inertia division unit 402, a first integration unit 403, a second integration unit 404, a virtual damper reaction force calculation unit 405, a first virtual spring reaction force calculation unit 406, a third weight multiplication unit 407, a second virtual spring reaction force calculation unit 408, a fifth weight multiplication unit 409, a first addition unit 410, a sixth weight multiplication unit 411, a second addition unit 412, a fourth weight multiplication unit 413, and a third addition unit 414.

The reduction ratio multiplication unit 431 converts the assist torque command value Tₐₛₛₜ for a rotary shaft of the electric motor 18 into an assist torque command value N·Tₐₛₛₜ for the output shaft 9 by multiplying the assist torque command value Tₐₛₛₜ by the reduction ratio N of the speed reducer 19. The assist torque command value N·Tₐₛₛₜ for the output shaft 9 calculated by the reduction ratio multiplication unit 431 is provided to the addition/subtraction unit 401 and also to the first addition unit 410.

The torsion bar torque T_{tb}, the assist torque command value N·Tₐₛₛₜ for the output shaft 9 calculated by the reduction ratio multiplication unit 431, a virtual damper reaction force c_{md}·dθ_{MD,cmd}/dt provided from the virtual damper reaction force calculation unit 405, and an addition result X of the third addition unit 414 are provided to the addition/subtraction unit 401.

The addition/subtraction unit 401 adds the assist torque command value N·Tₐₛₛₜ for the output shaft 9 to the torsion bar torque T_{tb}, and subtracts the virtual damper reaction force c_{md}·dθ_{MD,cmd}/dt and X from the addition result. Therefore, the addition/subtraction unit 401 calculates a moment of inertia J_{md}·d²θ_{MD,cmd}/dt² (= T_{tb} + N·Tₐₛₛₜ - c_{md}·dθ_{MD,cmd}/dt - X) that corresponds to J_{md}·d²θ_{col}/dt² on the left side of expression (11).

The inertia division unit 402 calculates a second derivative d²θ_{MD,cmd}/dt² of the manual steering command value θ_{MD,cmd} by dividing the moment of inertia J_{md}·d²θ_{MD,cmd}/dt² calculated by the addition/subtraction unit 401 by the column inertia J_{md}.

The first integration unit 403 calculates a first derivative dθ_{MD,cmd}/dt of the manual steering command value θ_{MD,cmd} by integrating the second derivative d²θ_{MD,cmd}/dt² of the manual steering command value θ_{MD,cmd}.

The second integration unit 404 calculates the manual steering command value θ_{MD,cmd} by integrating the first derivative dθ_{MD,cmd}/dt of the manual steering command value θ_{MD,cmd}. The manual steering command value θ_{MD,cmd} is output from the manual steering command value generation unit 45A.

The virtual damper reaction force calculation unit 405 calculates the virtual damper reaction force c_{md}·dθ_{MD,cmd}/dt by multiplying the first derivative dθ_{MD,cmd}/dt of the manual steering command value θ_{MD,cmd} calculated by the first integration unit 403 by the virtual load viscous damping coefficient c_{md}. The virtual damper reaction force c_{md}·dθ_{MD,cmd}/dt is fed back to the addition/subtraction unit 401.

The first virtual spring reaction force calculation unit 406 calculates a first virtual spring reaction force k_{md}·θ_{MD,cmd} by multiplying the manual steering command value θ_{MD,cmd} calculated by the second integration unit 404 by the virtual load spring stiffness coefficient k_{md}.

The third weight multiplication unit 407 multiplies the first virtual spring reaction force k_{md}·θ_{MD,cmd} by a third weight W3.

The second virtual spring reaction force calculation unit 408 calculates a second virtual spring reaction force k_{md}·θ_{MD,cmd} by multiplying the manual steering command value θ_{MD,cmd} calculated by the second integration unit 404 by the virtual load spring stiffness coefficient k_{md}.

The fifth weight multiplication unit 409 multiplies the second virtual spring reaction force k_{md}·θ_{MD,cmd} by a fifth weight W5.

The first addition unit 410 adds the assist torque command value N·Tₐₛₛₜ for the output shaft 9 calculated by the reduction ratio multiplication unit 431 to the target virtual spring reaction force T_{tb,d}(e_{L}). The sixth weight multiplication unit 411 multiplies the calculation result (T_{tb,d}(e_{L}) + N·Tₐₛₛₜ) of the first addition unit 410 by a sixth weight W6.

The second addition unit 412 adds the calculation result W5·k_{md}·θ_{MD,cmd} of the fifth weight multiplication unit 409 and the calculation result W6·(T_{tb,d}(e_{L}) + N·Tₐₛₛₜ) of the sixth weight multiplication unit 411.

The fourth weight multiplication unit 413 multiplies the calculation result {W5·k_{md}·θ_{MD,cmd} + W6·(T_{tb,d}(e_{L}) + N·Tₐₛₛₜ)} of the second addition unit 412 by a fourth weight W4.

The third addition unit 414 adds the calculation result W3·k_{md}·θ_{MD,cmd} of the third weight multiplication unit 407 and the calculation result W4·{W5·k_{md}·θ_{MD,cmd} + W6·(T_{tb,d}(e_{L}) + N·Tₐₛₛₜ)} of the fourth weight multiplication unit 413. The addition result [{W3·k_{md}·θ_{MD,cmd}} + W4·{W5·k_{md}·θ_{MD,cmd} + W6·(T_{tb,d}(e_{L}) + N·Tₐₛₛₜ)}] of the third addition unit 414 is fed back as X to the addition/subtraction unit 401.

In the present modification, when the vehicle is heading toward the departure avoidance side (non-departure side), the third weight W3 is set to 1 and the fourth weight W4 is set to zero as described later. When the vehicle is heading toward the departure side, the third weight W3 is set to zero and the fourth weight W4 is set to 1.

When the vehicle is heading toward the departure side and the lateral deviation e_{L} is larger than -e_{L,s} and smaller than e_{L,s}, the driving assist mode is the lane centering assist mode (LCA mode). The fifth weight W5 is set to 1 and the sixth weight W6 is set to zero.

When the vehicle is heading toward the departure side and the lateral deviation e_{L} is equal to or smaller than -e_{L,s} or equal to or larger than e_{L,s}, the driving assist mode is the lane keeping assist mode (LKA mode). The fifth weight W5 is set to zero and the sixth weight W6 is set to 1.

When the vehicle is heading toward the departure avoidance side (non-departure side), the addition result X of the third addition unit 414 is k_{md}·θ_{MD,cmd}. Therefore, the calculation result of the addition/subtraction unit 401 is (T_{tb} + N·Tₐₛₛₜ - c_{md}·dθ_{MD.cmd}/dt - k_{md}·θ_{MD,cmd}). As described later, c_{md} = cg (see FIG. 22) and k_{md} = kg (see FIG. 21) are set in this case. Therefore, the calculation result of the addition/subtraction unit 401 is (T_{tb} + N·Tₐₛₛₜ - cg·dθ_{MD,cmd}/dt - kg·θ_{MD,cmd}).

In this case, the manual steering command value generation unit 45A calculates the manual steering command value θ_{MD,cmd} based on an equation of motion given by expression (12) below.
[Math. 10] ${\text{J}}_{\text{md}} \cdot {{θ}^{¨}}_{\text{MD} \text{,cmd}} = {\text{T}}_{\text{tb}} + \text{N} \cdot {\text{T}}_{\text{asst}} - \text{cg} \cdot \dot{θ} {}_{\text{MD} , \text{cmd}} - \text{kg} \cdot {θ}_{\text{MD} \text{,cmd}}$

In expression (12), J_{md}·d²θ_{MD,cmd}/dt² is the moment of inertia. cg·dθ_{MD,cmd}/dt is the virtual damper reaction force. kg·θ_{MD,cmd} is the virtual spring reaction force.

That is, when the vehicle is heading toward the departure avoidance side, the manual steering command value generation unit 45A calculates the manual steering command value θ_{MD,cmd} using cg·dθ_{MD,cmd}/dt as the virtual damper reaction force c_{md}·dθ_{col}/dt in the equation of motion given by expression (11) and using kg·θ_{MD,cmd} as the virtual spring reaction force k_{md}·θ_{col} in the equation of motion given by expression (11).

When the vehicle is heading toward the departure side and the lateral deviation e_{L} is larger than -e_{L,s} and smaller than e_{L,s}, the addition result X of the third addition unit 414 is k_{md}·θ_{MD,cmd}. Therefore, the calculation result of the addition/subtraction unit 401 is (T_{tb} + N·Tₐₛₛₜ - c_{md}·dθ_{MD,cmd}/dt - k_{md}·θ_{MD,cmd}). As described later, c_{md} = cr(e_{L}) (see FIG. 22) and k_{md} = kr (see FIG. 21) are set in this case. Therefore, the calculation result of the addition/subtraction unit 401 is (T_{tb} + N·Tₐₛₛₜ - cr(e_{L})·dθ_{MD,cmd}/dt - kr·θ_{MD,cmd}).

In this case, the manual steering command value generation unit 45A calculates the manual steering command value θ_{MD,cmd} based on an equation of motion given by expression (13) below.
[Math. 11] ${\text{J}}_{\text{md}} \cdot {{θ}^{¨}}_{\text{MD} \text{,cmd}} = {\text{T}}_{\text{tb}} + \text{N} \cdot {\text{T}}_{\text{asst}} - \text{cr} \left({\text{e}}_{\text{L}}\right) \cdot \dot{θ} {}_{\text{MD} , \text{cmd}} - \text{kr} \cdot {θ}_{\text{MD} \text{,cmd}}$

In expression (13), J_{md}·d²θ_{MD,cmd}/dt² is the moment of inertia. cr(e_{L})·dθ_{MD,cmd} is the virtual damper reaction force. kr·θ_{MD,cmd} is the virtual spring reaction force.

That is, in the LCA mode, the manual steering command value generation unit 45A calculates the manual steering command value θ_{MD,cmd} using cr(e_{L})·dθ_{MD,cmd}/dt corresponding to the lateral deviation e_{L} as the virtual damper reaction force c_{md}·dθ_{col}/dt in the equation of motion given by expression (11) and using kr·θ_{MD,cmd} as the virtual spring reaction force k_{md}·θ_{col} in the equation of motion given by expression (11). Therefore, in the LCA mode, the virtual damper reaction force and the virtual spring reaction force can be made larger than those when the vehicle is heading toward the departure avoidance side.

When the vehicle is heading toward the departure side and the lateral deviation e_{L} is equal to or smaller than -e_{L,s} or equal to or larger than e_{L,s}, the addition result X of the third addition unit 414 is T_{tb,d}(e_{L}) + N·Tₐₛₛₜ). Therefore, the calculation result of the addition/subtraction unit 401 is (T_{tb} - c_{md}·dθ_{MD,cmd}/dt - T_{tb,d}(e_{L})). As described later, c_{md} = cr(e_{L}) (see FIG. 22) is set in this case. Therefore, the calculation result of the addition/subtraction unit 401 is (T_{tb} - cr(e_{L})·dθ_{MD,cmd}/dt - T_{tb,d}(e_{L})).

In this case, the manual steering command value generation unit 45A calculates the manual steering command value θ_{MD,cmd} based on an equation of motion given by expression (14) below.
[Math. 12] ${\text{J}}_{\text{md}} \cdot {{θ}^{¨}}_{\text{MD} \text{,cmd}} = {\text{T}}_{\text{tb}} - \text{cr} \left({\text{e}}_{\text{L}}\right) \cdot \dot{θ} {}_{\text{MD} , \text{cmd}} - {\text{T}}_{\text{tb} \text{,d}} \left({\text{e}}_{\text{L}}\right)$

In expression (14), J_{md}·d²θ_{MD,cmd}/dt² is the moment of inertia. cr(e_{L})·dθ_{MD,cmd} is the virtual damper reaction force. T_{tb,d}(e_{L}) is the target virtual spring reaction force.

That is, in the LKA mode, the manual steering command value generation unit 45A calculates the manual steering command value θ_{MD,cmd} by setting N·Tₘ (= N·Tₐₛₛₜ) to 0 in the equation of motion given by expression (11), using the virtual damper reaction force cr(e_{L})·dθ_{MD,cmd}/dt corresponding to the lateral deviation e_{L} as the virtual damper reaction force c_{md}·dθ_{col}/dt in the equation of motion given by expression (11), and using the target virtual spring reaction force T_{tb,d}(e_{L}) corresponding to the lateral deviation e_{L} as the virtual spring reaction force k_{md}·θ_{col} in the equation of motion given by expression (11).

Therefore, in the LKA mode, the virtual damper reaction force can be made larger than that when the vehicle is heading toward the departure avoidance side. In the LKA mode, the steering reaction force corresponding to the lateral deviation e_{L} can be applied to the driver compared to the LCA mode. Thus, the driver can easily recognize the distance from the center of the traveling lane or the distance to the lane.

In FIG. 24, the calculation result N·Tₐₛₛₜ of the reduction ratio multiplication unit 431 is provided to the first addition unit 410, but the calculation result N·Tₐₛₛₜ of the reduction ratio multiplication unit 431 need not be provided to the first addition unit 410. In this case, in the LKA mode, the manual steering command value generation unit 45A calculates the manual steering command value _{MD,cmd} based on the equation of motion in which N·Tₐₛₛₜ is added to the right side of expression (14).

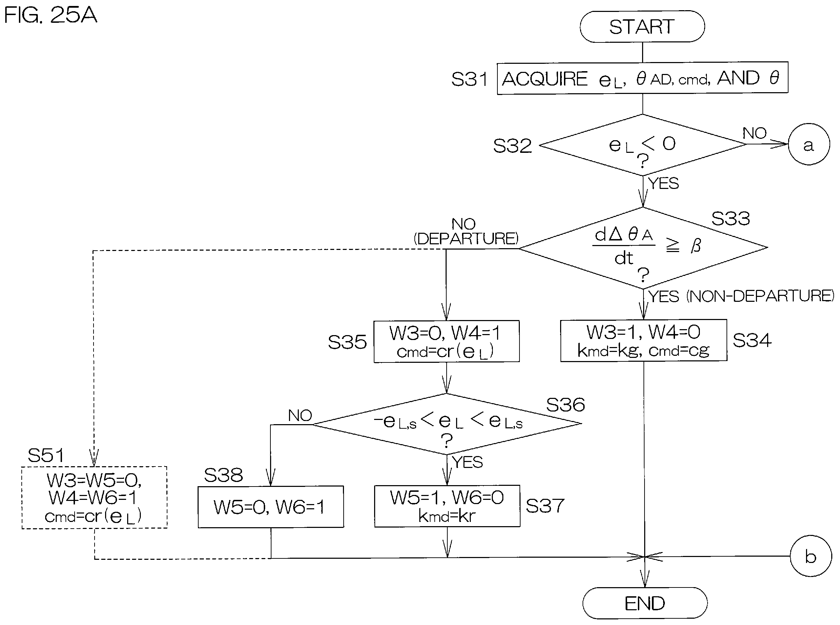

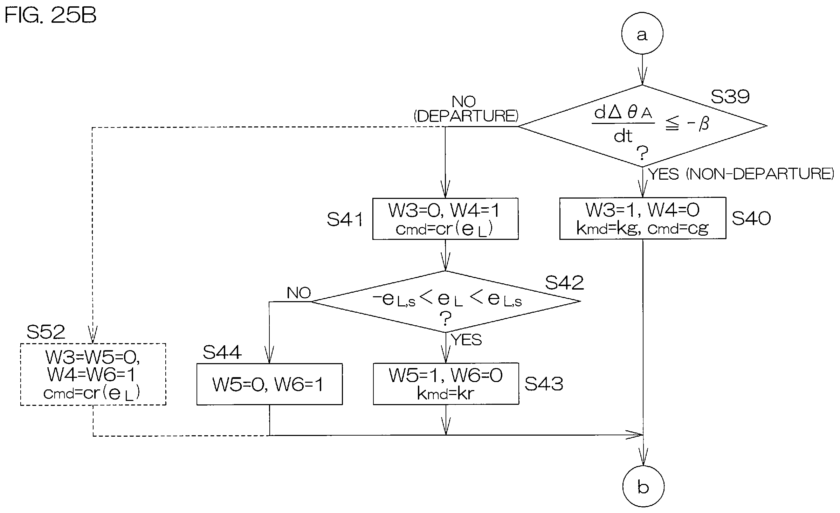

FIGS. 25A and 25B are flowcharts showing the procedure of the coefficient/weight setting process performed by the motion equation setting unit 43A in the driving assist mode. The coefficient/weight setting process shown in FIGS. 25A and 25B is started every time the driving assist mode is started, and is repeatedly performed at every predetermined calculation cycle until the driving assist mode is terminated.

The motion equation setting unit 43A first acquires the lateral deviation e_{L} and the automatic steering command value θ_{AD,cmd} provided from the higher-level ECU 201 and the actual steering angle θ calculated by the reduction ratio division unit 42 (step S31).

Next, the motion equation setting unit 43A determines whether the lateral deviation e_{L} is smaller than 0 (step S32). In other words, the motion equation setting unit 43A determines whether the sign of the lateral deviation e_{L} is negative.

When the lateral deviation e_{L} is smaller than 0 (step S32: YES), the motion equation setting unit 43A determines whether the time differential value dΔθ_{A}/dt of the angle deviation Δθ_{A} (= θ - θ_{AD,cmd}) between the actual steering angle θ and the automatic steering command value θ_{AD,cmd} is equal to or larger than the predetermined threshold value β (β > 0) (step S33).

When the time differential value dΔθ_{A}/dt is equal to or larger than β (step S33: YES), the motion equation setting unit 43A determines that the vehicle is heading toward the departure avoidance side (non-departure side), and proceeds to step S34.

In step S34, the motion equation setting unit 43A sets the third weight W3 to 1 and the fourth weight W4 to 0, sets the second virtual load spring stiffness coefficient kg as the virtual load spring stiffness coefficient k_{md}, and sets the second virtual load viscous damping coefficient cg as the virtual load viscous damping coefficient c_{md}. Thus, the manual steering command value generation unit 45A calculates the manual steering command value θ_{MD,cmd} based on expression (12). When the process of step S34 is performed, the motion equation setting unit 43A ends the process in the current calculation cycle.

When determination is made in step S33 that the time differential value dΔθ_{A}/dt is smaller than β (step S33: NO), the motion equation setting unit 43A determines that the vehicle is heading toward the departure side, and proceeds to step S35.

In step S35, the motion equation setting unit 43A sets the third weight W3 to 0 and the fourth weight W4 to 1. The motion equation setting unit 43A sets the first virtual load viscous damping coefficient cr(e_{L}) as the virtual load viscous damping coefficient c_{md}. Specifically, the motion equation setting unit 43A sets the value of the first virtual load viscous damping coefficient cr(e_{L}) corresponding to the lateral deviation e_{L} as the virtual load viscous damping coefficient c_{md} based on the viscous damping coefficient map that stores the value of the first virtual load viscous damping coefficient cr(e_{L}) with respect to the lateral deviation e_{L} in FIG. 22 and the lateral deviation e_{L} acquired in step S31.

The motion equation setting unit 43A determines whether the LCA mode condition that the lateral deviation e_{L} is larger than -e_{L,s} and smaller than e_{L,s} is satisfied (step S36).

When the LCA mode condition is satisfied (step S36: YES), the motion equation setting unit 43A sets the fifth weight W5 to 1 and the sixth weight W6 to 0, and sets the first virtual load spring stiffness coefficient kr as the virtual load spring stiffness coefficient k_{md} (step S37). Thus, the manual steering command value generation unit 45A calculates the manual steering command value θ_{MD,cmd} based on expression (13). When the process of step S37 is performed, the motion equation setting unit 43A ends the process in the current calculation cycle.

When determination is made in step S36 that the LCA mode condition is not satisfied (step S36: NO), the motion equation setting unit 43A sets the fifth weight W5 to 0 and the sixth weight W6 to 1 (step S38). Thus, the manual steering command value generation unit 45A calculates the manual steering command value θ_{MD,cmd} based on expression (14). When the process of step S38 is performed, the motion equation setting unit 43A ends the process in the current calculation cycle.

When determination is made in step S32 that the lateral deviation e_{L} is equal to or larger than 0 (step S32: NO), the motion equation setting unit 43A determines whether the time differential value dΔθ_{A}/dt is equal to or smaller than -β (step S39).

When the time differential value dΔθ_{A}/dt is equal to or smaller than -β (step S39: YES), the motion equation setting unit 43A determines that the vehicle is heading toward the departure avoidance side, and proceeds to step S40.

In step S40, the motion equation setting unit 43A sets the third weight W3 to 1 and the fourth weight W4 to 0, sets the second virtual load spring stiffness coefficient kg as the virtual load spring stiffness coefficient k_{md}, and sets the second virtual load viscous damping coefficient cg as the virtual load viscous damping coefficient c_{md}. Thus, the manual steering command value generation unit 45A calculates the manual steering command value θ_{MD,cmd} based on expression (12). When the process of step S40 is performed, the motion equation setting unit 43A ends the process in the current calculation cycle.

When determination is made in step S39 that the time differential value dΔθ_{A}/dt is larger than -β (step S39: NO), the motion equation setting unit 43A determines that the vehicle is heading toward the departure side, and proceeds to step S41.

In step S41, the motion equation setting unit 43A sets the third weight W3 to 0 and the fourth weight W4 to 1. The motion equation setting unit 43A sets the first virtual load viscous damping coefficient cr(e_{L}) as the virtual load viscous damping coefficient c_{md}.

The motion equation setting unit 43A determines whether the LCA mode condition that the lateral deviation e_{L} is larger than -e_{L,s} and smaller than e_{L,s} is satisfied (step S42).

When the LCA mode condition is satisfied (step S42: YES), the motion equation setting unit 43A sets the fifth weight W5 to 1 and the sixth weight W6 to 0, and sets the first virtual load spring stiffness coefficient kr as the virtual load spring stiffness coefficient k_{md} (step S43). Thus, the manual steering command value generation unit 45A calculates the manual steering command value θ_{MD,cmd} based on expression (13). When the process of step S43 is performed, the motion equation setting unit 43A ends the process in the current calculation cycle.

When determination is made in step S42 that the LCA mode condition is not satisfied (step S42: NO), the motion equation setting unit 43A sets the fifth weight W5 to 0 and the sixth weight W6 to 1 (step S44). Thus, the manual steering command value generation unit 45A calculates the manual steering command value θ_{MD,cmd} based on expression (14). When the process of step S44 is performed, the motion equation setting unit 43A ends the process in the current calculation cycle.

### [Description of Modification of Coefficient/weight Setting Process]

When the virtual load spring stiffness coefficient k_{md} is switched from the first virtual load spring stiffness coefficient kr to the second virtual load spring stiffness coefficient kg, it is preferable to gradually reduce the virtual load spring stiffness coefficient k_{md} from the first virtual load spring stiffness coefficient kr to the second virtual load spring stiffness coefficient kg. When the virtual load spring stiffness coefficient k_{md} is switched from the second virtual load spring stiffness coefficient kg to the first virtual load spring stiffness coefficient kr, it is preferable to gradually increase the virtual load spring stiffness coefficient k_{md} from the second virtual load spring stiffness coefficient kg to the first virtual load spring stiffness coefficient kr.

When the virtual load viscous damping coefficient c_{md} is switched from the first virtual load viscous damping coefficient cr(e_{L}) to the second virtual load viscous damping coefficient cg, it is preferable to gradually reduce the virtual load viscous damping coefficient c_{md} from the first virtual load viscous damping coefficient cr(e_{L}) to the second virtual load viscous damping coefficient cg. When the virtual load viscous damping coefficient c_{md} is switched from the second virtual load viscous damping coefficient cg to the first virtual load viscous damping coefficient cr(e_{L}), it is preferable to gradually increase the virtual load viscous damping coefficient c_{md} from the second virtual load viscous damping coefficient cg to the first virtual load viscous damping coefficient cr(e_{L}).

When the third weight W3 is switched from 1 to 0, it is preferable to gradually reduce the third weight W3 from 1 to 0. Similarly, when the third weight W3 is switched from 0 to 1, it is preferable to gradually increase the third weight W3 from 0 to 1. The same applies to the other weights W4 to W6.

When the driving mode is the normal mode, the first weight W1 is set to 1 and the second weight W2 is set to 0. Therefore, the manual steering command value θ_{MD,cmd} is not reflected in the motor torque command value T_{m,cmd}. In other words, the steering reaction force based on the manual steering command value _{MD,cmd} is not reflected. However, in order to enable the manual steering command value generation unit 45A to continue the calculation operation for the manual steering command value θ_{MD,cmd} even in the normal mode, the motion equation setting unit 43A may set the virtual load spring stiffness coefficient k_{md}, the virtual load viscous damping coefficient c_{md}, and the target virtual spring reaction force T_{tb,d}(e_{L}).

In this case, when the driving mode is the normal mode, the motion equation setting unit 43A may set the virtual load spring stiffness coefficient k_{md} to the predetermined value k_{M} that is set in advance, set the virtual load viscous damping coefficient c_{md} to the predetermined value c_{M} that is set in advance, and set the target virtual spring reaction force T_{tb,d}(e_{L}) to a predetermined value T_{tb,dM}. For example, k_{M} may be set to k1 in FIG. 21. For example, c_{M} may be set to c1 in FIG. 22. For example, T_{tb,dM} may be set to T_{tb,d,s} in FIG. 20.

The operation of the manual steering command value generation unit 45A may be stopped in the normal mode. In this case, the motion equation setting unit 43A need not set the virtual load spring stiffness coefficient k_{md}, the virtual load viscous damping coefficient c_{md}, and the target virtual spring reaction force T_{tb,d}(e_{L}) in the normal mode.

When determination is made in step S33 that the time differential value dΔθ_{A}/dt is smaller than β (step S33: NO), as shown in step S51 of the dashed line in FIG. 25A, the third weight W3 and the fifth weight W5 may be set to 0, the fourth weight W4 and the sixth weight W6 may be set to 1, and the first virtual load viscous damping coefficient cr(e_{L}) may be set as the virtual load viscous damping coefficient c_{md}.

Similarly, when determination is made in step S39 that the time differential value dΔθ_{A}/dt is larger than -β (step S39: NO), as shown in step S52 of the dashed line in FIG. 25B, the third weight W3 and the fifth weight W5 may be set to 0, the fourth weight W4 and the sixth weight W6 may be set to 1, and the first virtual load viscous damping coefficient cr(e_{L}) may be set as the virtual load viscous damping coefficient c_{md}.

In the above modification, the value of the virtual load viscous damping coefficient c_{md} is switched between the case where determination is made that the vehicle is heading toward the departure avoidance side and the case where determination is made that the vehicle is heading toward the departure side, but need not be switched between these cases. Specifically, the value of the virtual load viscous damping coefficient c_{md} may be a fixed value.

### [Description of Modification of Manual Steering Command Value Generation Unit in FIG. 19]

A manual steering command value generation unit 45B to which the automatic steering command value θ_{AD.cmd} is further input as shown by the dashed line in FIG. 19 may be used in place of the manual steering command value generation unit 45A in FIG. 19. Hereinafter, a motor control ECU 202B using the manual steering command value generation unit 45B in place of the manual steering command value generation unit 45A will be referred to as a second modification of the motor control ECU.

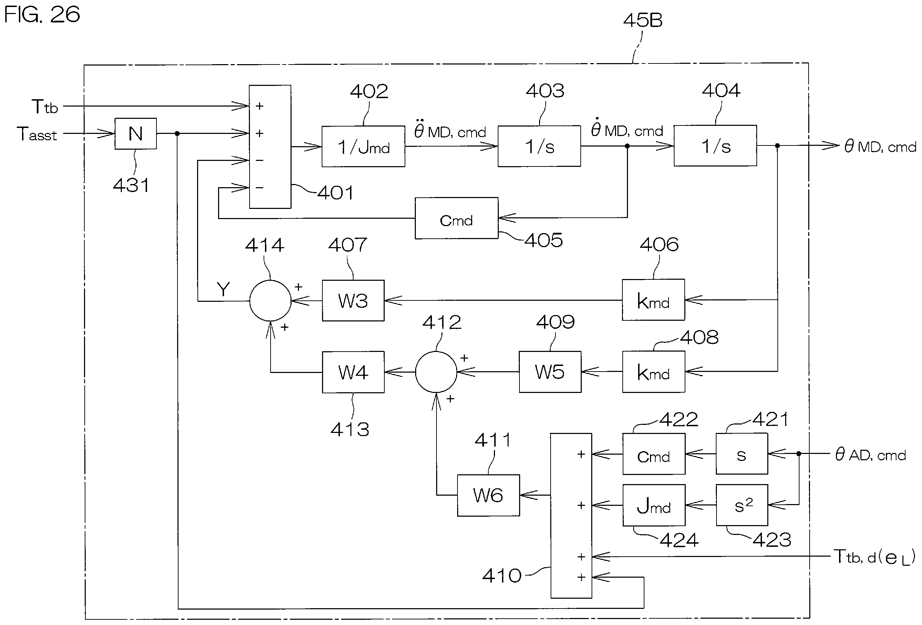

FIG. 26 is a block diagram showing the configuration of the manual steering command value generation unit 45B. In FIG. 26, portions corresponding to those in FIG. 19 described above are represented by the same signs as those in FIG. 19.

The manual steering command value generation unit 45B includes the reduction ratio multiplication unit 431, the addition/subtraction unit 401, the inertia division unit 402, the first integration unit 403, the second integration unit 404, the first virtual damper reaction force calculation unit 405, the first virtual spring reaction force calculation unit 406, the third weight multiplication unit 407, the second virtual spring reaction force calculation unit 408, the fifth weight multiplication unit 409, a first-order differentiation unit 421, a second virtual damper reaction force calculation unit 422, a second-order differentiation unit 423, an inertia multiplication unit 424, the first addition unit 410, the sixth weight multiplication unit 411, the second addition unit 412, the fourth weight multiplication unit 413, and the third addition unit 414.

In the manual steering command value generation unit 45B in FIG. 26, the first-order differentiation unit 421, the second virtual damper reaction force calculation unit 422, the second-order differentiation unit 423, and the inertia multiplication unit 424 are added to the manual steering command value generation unit 45A in FIG. 24.

The first-order differentiation unit 421 obtains the first derivative of the automatic steering command value θ_{AD,cmd}. The second virtual damper reaction force calculation unit 422 calculates a second virtual damper reaction force c_{md}·dθ_{AD,cmd}/dt by multiplying the first derivative dθ_{AD,cmd}/dt of the automatic steering command value θ_{AD,cmd} by the virtual load viscous damping coefficient c_{md}. The second virtual damper reaction force c_{md}·dθ_{AD,cmd}/dt is a virtual damper reaction force for the automatic steering command value θ_{AD,cmd}. Hereinafter, the virtual damper reaction force c_{md}·dθ_{MD,cmd}/dt calculated by the first virtual damper reaction force calculation unit 405 will be referred to as a first virtual damper reaction force.

The second-order differentiation unit 423 obtains the second derivative of the automatic steering command value θ_{AD,cmd}. The inertia multiplication unit 424 calculates a moment of inertia J_{md}·d²θ_{AD,cmd}/dt² for the automatic steering command value θ_{AD,cmd} by multiplying the second derivative d²θ_{AD,cmd}/dt² of the automatic steering command value θ_{AD,cmd} by the column inertia J_{md}.

The first addition unit 410 adds the moment of inertia J_{md}·d²θ_{AD,cmd}/dt² for the automatic steering command value θ_{AD,cmd}, the target virtual spring reaction force T_{tb,d}(e_{L}), and the assist torque command value N·Tₐₛₛₜ for the output shaft 9 to the virtual damper reaction force (second virtual damper reaction force) c_{md}·dθ_{AD,cmd}/dt for the automatic steering command value θ_{AD,cmd}.

The sixth weight multiplication unit 411 multiplies the calculation result (c_{md}·dθ_{AD,cmd}/dt + J_{md}·d²θ_{AD,cmd}/dt² + T_{tb,d}(e_{L}) + N·Tₐₛₛₜ) of the first addition unit 410 by the sixth weight W6.

The second addition unit 412 adds the calculation result W5·k_{md}·θ_{MD,cmd} of the fifth weight multiplication unit 409 and the calculation result W6·(c_{md}·dθ_{AD,cmd}/dt + J_{md}·d²θ_{AD,cmd}/dt² + T_{tb,d}(e_{L}) + N·Tₐₛₛₜ) of the sixth weight multiplication unit 411.

The fourth weight multiplication unit 413 multiplies the calculation result {W5·k_{md}·θ_{MD,cmd} + W6·(c_{md}·dθ_{AD,cmd}/dt + J_{md}·d²θ_{AD,cmd}/dt² + T_{tb,d}(e_{L}) + N·Tₐₛₛₜ)} of the second addition unit 412 by the fourth weight W4.

The third addition unit 414 adds the calculation result W3·k_{md}·θ_{MD,cmd} of the third weight multiplication unit 407 and the calculation result W4·{W5·k_{md}·θ_{MD·cmd} + W6·(c_{md}·θd_{AD,cmd}/dt + J_{md}·d²·θ_{AD,cmd}/dt² + T_{tb,d}(e_{L}) + N·Tₐₛₛₜ)} of the fourth weight multiplication unit 413. The addition result [{W3·θk_{md}·θ_{MD,cmd}} + W4·{W5·k_{md}·θ_{MD,cmd} + W6·(c_{md}·dθ_{AD,cmd}/dt + J_{md}·d²θ_{AD,cmd}/dt² + T_{tb,d}(e_{L}) + N·Tₐₛₛₜ)}] of the third addition unit 414 is fed back as Y to the addition/subtraction unit 401.

In the present modification, the motion equation setting unit 43A performs the same process as the coefficient/weight setting process described with reference to FIGS. 25A and 25B in the driving assist mode.

Therefore, when the vehicle is heading toward the departure avoidance side (non-departure side), the third weight W3 is set to 1 and the fourth weight W4 is set to zero. When the vehicle is heading toward the departure side, the third weight W3 is set to zero and the fourth weight W4 is set to 1.

When the vehicle is heading toward the departure side and the lateral deviation e_{L} is larger than -e_{L,s} and smaller than e_{L,s}, the driving assist mode is the LCA mode. The fifth weight W5 is set to 1 and the sixth weight W6 is set to zero.

When the vehicle is heading toward the departure side and the lateral deviation e_{L} is equal to or smaller than -e_{L,s} or equal to or larger than e_{L,s}, the driving assist mode is the LKA mode. The fifth weight W5 is set to zero and the sixth weight W6 is set to 1.

When the vehicle is heading toward the departure avoidance side (non-departure side), the addition result Y of the third addition unit 414 is k_{md}·θ_{MD,cmd}. Therefore, the calculation result of the addition/subtraction unit 401 is (T_{tb} + N·Tₐₛₛₜ - c_{md}·dθ_{MD,cmd}/dt - k_{md}·θ_{MD,cmd}). In this case, c_{md} = cg (see FIG. 22) and k_{md} = kg (see FIG. 21) are set. Therefore, the calculation result of the addition/subtraction unit 401 is (T_{tb} + N·Tₐₛₛₜ - cg·dθ_{MD,cmd}/dt - kg·θ_{MD,cmd}).

In this case, the manual steering command value generation unit 45B calculates the manual steering command value θ_{MD,cmd} based on the equation of motion given by expression (12).

When the vehicle is heading toward the departure side and the lateral deviation e_{L} is larger than -e_{L,s} and smaller than e_{L,s}, the addition result Y of the third addition unit 414 is k_{md}·θ_{MD,cmd}. Therefore, the calculation result of the addition/subtraction unit 401 is (T_{tb} + N·Tₐₛₛₜ - c_{md}·dθ_{MD,cmd}/dt - k_{md}·θ_{MD,cmd}). In this case, c_{md} = cr(e_{L}) (see FIG. 22) and k_{md} = kr (see FIG. 21) are set. Therefore, the calculation result of the addition/subtraction unit 401 is (T_{tb} + N·Tₐₛₛₜ - cr(e_{L})·dθ_{MD,cmd}/dt - kr·θ_{MD,cmd}).

In this case, the manual steering command value generation unit 45B calculates the manual steering command value θ_{md} based on the equation of motion given by expression (13).

Therefore, in the LCA mode, the virtual damper reaction force and the virtual spring reaction force can be made larger than those when the vehicle is heading toward the departure avoidance side.

When the vehicle is heading toward the departure side and the lateral deviation e_{L} is equal to or smaller than -e_{L,s} or equal to or larger than e_{L,s}, the addition result Y of the third addition unit 414 is (c_{md}·dθ_{AD,cmd}/dt + J_{md}·d²θ_{AD,cmd}/dt² + T_{tb,d}(e_{L}) + N·Tₐₛₛₜ). Therefore, the calculation result of the addition/subtraction unit 401 is (T_{tb} - c_{md}·dθ_{MD,cmd}/dt - c_{md}·dθ_{AD,cmd}/dt - J_{md}·d²θ_{AD,cmd}/dt² - T_{tb,d}(e_{L})). In this case, c_{md} = cr(e_{L}) (see FIG. 22) is set. Therefore, the calculation result of the addition/subtraction unit 401 is {(T_{tb} - (cr(e_{L})·dθ_{MD,cmd}/dt + cr(e_{L})·dθ_{AD,cmd}/dt) - J_{md}·d²θ_{AD,cmd}/dt² - T_{tb,d}(e_{L})}.

In this case, the manual steering command value generation unit 45B calculates the manual steering command value θ_{md} based on an equation of motion given by expression (15) below.
[Math. 13] $\begin{matrix}{\text{J}}_{\text{md}} \cdot {{θ}^{¨}}_{\text{MD} \text{,cmd}} + {\text{J}}_{\text{md}} \cdot {{θ}^{¨}}_{\text{AD} \text{,cmd}} = {\text{T}}_{\text{tb}} - \text{cr} \left({\text{e}}_{\text{L}}\right) \cdot \dot{θ} {}_{\text{MD} , \text{cmd}} \\ - \text{cr} \left({\text{e}}_{\text{L}}\right) \cdot {\dot{θ}}_{\text{AD} \text{,cmd}} - {\text{T}}_{\text{tb} \text{,d}} \left({\text{e}}_{\text{L}}\right)\end{matrix}$

In expression (15), (J_{md}·d²θ_{MD,cmd}/dt² + J_{md}·d²θ_{AD,cmd}/dt²) is the moment of inertia, and (cr(e_{L})·θd_{MD,cmd}/dt + cr(e_{L})·dθ_{AD,cmd}/dt) is the virtual damper reaction force. T_{tb,d}(e_{L}) is the target virtual spring reaction force.

That is, in the LKA mode, the manual steering command value generation unit 45B calculates the manual steering command value θ_{MD,cmd} by setting N·Tₘ (= N·Tₐₛₛₜ) to 0 in the equation of motion given by expression (11) and using (J_{md}·d²θ_{MD,cmd}/dt² + J_{md}·d²θ_{AD,cmd}/dt²), (cr(e_{L})·dθ_{MD,cmd}/dt + cr(e_{L})·dθ_{AD,cmd}/dt), and T_{tb,d}(e_{L}) as the moment of inertia J_{md}·d²θ_{col}/dt², the virtual damper reaction force C_{md}·dθ_{col}/dt, and the virtual spring reaction force k_{md}·θ_{col} in expression (11), respectively.

Therefore, in the LKA mode, the virtual damper reaction force can be made larger than that when the vehicle is heading toward the departure avoidance side. In the LKA mode, the steering reaction force corresponding to the lateral deviation e_{L} can be applied to the driver compared to the LCA mode. Thus, the driver can easily recognize the distance from the center of the traveling lane or the distance to the lane.

In FIG. 26, the calculation result N·Tₐₛₛₜ of the reduction ratio multiplication unit 431 is provided to the first addition unit 410, but the calculation result N·Tₐₛₛₜ of the reduction ratio multiplication unit 431 need not be provided to the first addition unit 410. In this case, in the LKA mode, the manual steering command value generation unit 45B calculates the manual steering command value θ_{MD,cmd} based on the equation of motion in which N·Tₐₛₛₜ is added to the right side of expression (15).

The second modification of the motor control ECU has the same effects as those of the first modification of the motor control ECU described above. The second modification of the motor control ECU has an effect over the first modification of the motor control ECU in that the sense of discomfort felt by the driver can be reduced in the LKA mode. This point will be described below.

Referring to FIGS. 19 and 5, in the cooperative steering mode, the electric motor 18 is controlled so that the actual steering angle θ follows the integrated angle command value θ_{int,cmd}. Assuming that the actual steering angle θ completely follows the integrated angle command value θ_{int,cmd}, a relationship of θ_{int,cmd} = θ - θ_{AD,cmd} holds.

In this case, the virtual damper reaction force cr(e_{L})·dθ_{MD,cmd}/dt for the manual steering command value θ_{MD,cmd} in expression (15) is given by expression (16) below.
[Math. 14] $\begin{matrix}cr \left({e}_{L}\right) \cdot {\dot{θ}}_{MD , cmd} = cr \left({e}_{L}\right) \cdot \left(\dot{θ}-{\dot{θ}}_{AD , cmd}\right) \\ = cr \left({e}_{L}\right) \cdot \dot{θ} - cr \left({e}_{L}\right) \cdot {\dot{θ}}_{AD , cmd}\end{matrix}$

The moment of inertia J_{md}·d²θ_{MD,cmd}/dt² for the manual steering command value θ_{MD,cmd} in expression (15) is given by expression (17) below.
[Math. 15] $\begin{matrix}{J}_{md} \cdot {{θ}^{¨}}_{MD , cmd} = {J}_{md} \cdot \left({θ}^{¨}-{{θ}^{¨}}_{AD , cmd}\right) \\ = {J}_{md} \cdot {θ}^{¨} - {J}_{md} \cdot {{θ}^{¨}}_{AD , cmd}\end{matrix}$

That is, cr(e_{L})·dθ_{MD,cmd}/dt includes an actual steering angle component cr(e_{L})·dθ/dt corresponding to the first derivative of the actual steering angle θ, and an automatic steering component -cr(e_{L})·dθ_{AD,cmd}/dt corresponding to the first derivative of the automatic steering command value θ_{AD,cmd}. Similarly, J_{md}·d²θ_{MD,cmd}/dt² includes an actual steering angle component J_{md}·d²θ/dt² corresponding to the second derivative of the actual steering angle θ, and an automatic steering component -J_{md}·d²θ_{AD,cmd}/dt² corresponding to the second derivative of the automatic steering command value θ_{AD,cmd}.

The actual steering angle components cr(e_{L})·dθ/dt and J_{md}·d²θ/dt² correspond to the driver's behavior. Therefore, the driver does not feel the sense of discomfort. The automatic steering components -cr(e_{L})·dθ_{AD,cmd}/dt and -J_{md}·d²θ_{AD,cmd}/dt² are not related to the driver's behavior. Therefore, the driver may feel the sense of discomfort. Since the absolute value of -dθ_{AD,cmd}/dt is larger than the absolute value of -d²θ_{AD,cmd}/dt², the automatic steering component -cr(e_{L})·dθ_{AD,cmd}/dt of the virtual damper reaction force is particularly likely to have an adverse effect on the steering feel.

In the second modification of the motor control ECU, the equation of motion given by expression (15) includes, as the virtual damper reaction force, the virtual damper reaction force cr(e_{L}) ·dθ_{AD,cmd}/dt for the automatic steering command value θ_{AD,cmd} in addition to the virtual damper reaction force cr(e_{L})·dθ_{MD,cmd}/dt for the manual steering command value θ_{MD,cmd}. The equation of motion given by expression (15) includes, as the moment of inertia, the moment of inertia J_{md}·d²θ_{AD,cmd}/dt² for the automatic steering command value θ_{AD,cmd} in addition to the moment of inertia J_{md}·d²θ_{MD,cmd}/dt² for the manual steering command value θ_{MD,cmd}.

Thus, it is possible to reduce the automatic steering component -cr(e_{L})·dθ_{AD,cmd}/dt included in the virtual damper reaction force cr(e_{L})·dθ_{MD,cmd}/dt for the manual steering command value θ_{md}. Similarly, it is possible to reduce the automatic steering component -J_{md}·θd²θ_{AD,cmd}/dt² included in the moment of inertia J_{md}·d²θ_{MD,cmd}/dt² for the manual steering command value θ_{MD,cmd}. Accordingly, the sense of discomfort felt by the driver can be reduced in the LKA mode.

Assuming that a relationship of θ_{MD,cmd} = θ - θ_{AD,cmd} holds, the equation of motion given by expression (15) is as shown in expression (18) below.
[Math. 16] ${J}_{md} \cdot {θ}^{¨} = {T}_{tb} - cr \left({e}_{L}\right) \cdot \dot{θ} - {T}_{tb , d} \left({e}_{L}\right)$

In this case, the automatic steering component -cr(e_{L})·dθ_{AD,cmd}/dt included in cr(e_{L})·dθ_{MD,cmd}/dt is compensated for, and only the actual steering angle component cr(e_{L})·dθ/dt for the actual steering angle θ remains. The automatic steering component -J_{md}·d²θ_{AD,cmd}/dt² included in J_{md}·d²θ_{MD,cmd}/dt² is compensated for, and only J_{md}·d²θ/dt² for the actual steering angle θ remains.

The details described above in [Description of Modification of Coefficient/weight Setting Process] can also be applied to the manual steering command value generation unit 45B that is the modification of the manual steering command value generation unit 45A in FIG. 19.

In the first and second modifications of the motor control ECU described above, the weight setting unit 52 may perform the weighting process similar to that in FIG. 9 in the driving assist mode. However, α in steps S2 and S4 in FIG. 9 is replaced with e_{L,s} (see FIGS. 20 to 22).

In this case, when the distance between the reference vehicle position and the lane center is larger than e_{L,s} in the driving assist mode, the weight setting unit 52 sets the first weight W1 to 0, and sets the second weight W2 to 1. When the distance between the reference vehicle position and the lane center is equal to or smaller than e_{L,s} in the driving assist mode, the weight setting unit 52 sets the first weight W1 to 1, and sets the second weight W2 to 0. Therefore, even in the driving assist mode, the drive of the electric motor 18 is controlled based on the assist torque command value Tₐₛₛₜ instead of the integrated motor torque command value T_{mint,cmd} when the distance between the reference vehicle position and the lane center is equal to or smaller than e_{L,s}.

When the first weight W1 is switched from 1 to 0, it is preferable to gradually reduce the first weight W1 from 1 to 0. Similarly, when the first weight W1 is switched from 0 to 1, it is preferable to gradually increase the first weight W1 from 0 to 1. The same applies to the second weight W2.

When the driving mode is the normal mode, the weight setting unit 52 sets the first weight W1 to 1, and sets the second weight W2 to 0.

Although the first to fourth embodiments of the present invention, the modifications of the weight setting unit, and the modifications of the motor control ECU have been described above, the present invention can also be carried out in other forms.

In the first to fourth embodiments and the modifications of the motor control ECU described above, the lateral deviation e_{L} that is the distance from the center of the lane where the vehicle is currently traveling to the reference vehicle position is used as the vehicle lateral position. However, the distance from the boundary of the lane where the vehicle is currently traveling (lane boundary) to the reference vehicle position may be used as the vehicle lateral position.

In the first to fourth embodiments and the modifications of the motor control ECU described above, the assist torque command value Tₐₛₛₜ is multiplied by the first weight W1, and the assist torque command value W1·Tₐₛₛₜ after the first weight multiplication is provided to the addition unit 50. Instead, however, a manual torque command value according to the manual steering command value θ_{MD,cmd} may be multiplied by the first weight W1, and the manual torque command value after the first weight multiplication may be provided to the addition unit 50.

In the first to fourth embodiments and the modifications of the motor control ECU described above, the angle control unit 47 (see FIG. 5) includes the feedforward control unit 63. However, the feedforward control unit 63 may be omitted. In this case, the feedback control torque T_{fb} calculated by the feedback control unit 62 is basic target torque.

The first to fourth embodiments and the modifications of the motor control ECU described above illustrate an example in which the present invention is applied to a column type EPS. However, the present invention is also applicable to EPSs other than the column type. The present invention is also applicable to a steer-by-wire system.

Although the embodiments of the present invention are described in detail above, these are merely specific examples used to clarify the technical content of the present invention, and the present invention should not be construed as being limited to the specific examples, and the scope of the present invention is limited only by the appended claims.

This application corresponds to Japanese Patent Application No. 2022-181888 filed with the Japan Patent Office on November 14, 2022, the entire disclosure of which is incorporated herein by reference.

### Description of the Reference Numerals

1 ... electric power steering system, 3 ... steered wheel, 4 ... steering operation mechanism, 18 ... electric motor, 43 ... road reaction force characteristic setting unit, 43A ... motion equation setting unit, 44 ... assist torque command value setting unit, 45, 45A, 45B ... manual steering command value generation unit, 46 ... integrated angle command value calculation unit, 47 ... angle control unit, 48 ... first weight multiplication unit, 49 ... second weight multiplication unit, 50 ... addition unit, 51 ... torque control unit, 52 ... weight setting unit, 201 ... higher-level ECU, 202, 202A, 202B ... motor control ECU

## Claims

1. A motor control device that controls drive of an electric motor of a steering device, the motor control device comprising:
a manual steering command value generation unit that generates a manual steering command value using an equation of motion of a reference model of the steering device;
an integrated angle command value calculation unit that calculates an integrated angle command value by adding the manual steering command value to an automatic steering command value provided in a driving assist mode;
a control unit that performs angle control on the electric motor for steering angle control based on the integrated angle command value; and
a motion equation setting unit that changes the equation of motion based on a time differential value of an angle deviation between the automatic steering command value and an actual steering angle.

2. The motor control device according to claim 1, wherein
the equation of motion includes road reaction force characteristic coefficients, and
the motion equation setting unit changes the equation of motion by changing a value of at least one road reaction force characteristic coefficient out of the road reaction force characteristic coefficients included in the equation of motion.

3. The motor control device according to claim 1, wherein
the motion equation setting unit is configured to change the equation of motion by switching a first equation of motion and a second equation of motion,
in the first equation of motion, a target virtual spring reaction force corresponding to a lateral position for a reference position of a vehicle relative to a traveling lane is used as a virtual spring reaction force, and
in the second equation of motion, a virtual spring reaction force set using a virtual load spring stiffness coefficient that is a constant value regardless of the lateral position is used as the virtual spring reaction force.

4. The motor control device according to any one of claims 1 to 3, wherein the motion equation setting unit is configured to, based on either a lateral position for a reference position of a vehicle relative to a traveling lane or the angle deviation and based on the time differential value, make determination as to whether the vehicle is heading toward a departure side or a departure avoidance side, and change the equation of motion based on a result of the determination.

5. The motor control device according to claim 2, wherein the motion equation setting unit makes, based on either a lateral position for a reference position of a vehicle relative to a traveling lane or the angle deviation and based on the time differential value, determination as to whether the vehicle is heading toward a departure side or a departure avoidance side, and when the vehicle is heading toward the departure avoidance side, sets the value of the at least one road reaction force characteristic coefficient out of the road reaction force characteristic coefficients included in the equation of motion to be smaller than when the vehicle is heading toward the departure side.

6. The motor control device according to claim 2, wherein the motion equation setting unit makes, based on either a lateral position for a reference position of a vehicle relative to a traveling lane or the angle deviation and based on the time differential value, determination as to whether the vehicle is heading toward a departure side or a departure avoidance side, and when the vehicle is heading toward the departure side, changes the at least one road reaction force characteristic coefficient out of the road reaction force characteristic coefficients included in the equation of motion based on the lateral position.

7. The motor control device according to claim 3, wherein the motion equation setting unit makes, using the time differential value, determination as to whether the vehicle is heading toward a departure side or a departure avoidance side, sets the first equation of motion as the equation of motion when the vehicle is heading toward the departure side, and sets the second equation of motion as the equation of motion when the vehicle is heading toward the departure avoidance side.
